(19)

Europäisches
Patentamt
European
Patent Office
Office européen
des brevets

(11) **EP 3 995 988 B1**

(12) **EUROPEAN PATENT SPECIFICATION**

(45) Date of publication and mention
of the grant of the patent:
**24.06.2026 Bulletin 2026/26**

(21) Application number: **20837645.9**

(22) Date of filing: **04.07.2020**

(51) International Patent Classification (IPC):
**G01C 21/20** *(2006.01)*    **G06V 10/24** *(2022.01)*
**G06V 20/10** *(2022.01)*    **G06T 7/73** *(2017.01)*

(52) Cooperative Patent Classification (CPC):
**G06T 7/74; G01C 21/206; G01C 21/383;
G01C 21/3837; G06V 10/245; G06V 20/10;**
G06T 2207/30244

(86) International application number:
**PCT/CN2020/100306**

(87) International publication number:
**WO 2021/004416 (14.01.2021 Gazette 2021/02)**

(54) **METHOD AND APPARATUS FOR ESTABLISHING BEACON MAP ON BASIS OF VISUAL BEACONS**

VERFAHREN UND VORRICHTUNG ZUR ERSTELLUNG EINER BAKENKARTE AUF DER GRUNDLAGE VISUELLER BAKEN

PROCÉDÉ ET APPAREIL PERMETTANT D'ÉTABLIR UNE CARTE DE BALISES SUR LA BASE DE BALISES VISUELLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2019 CN 201910603494**

(43) Date of publication of application:
**11.05.2022 Bulletin 2022/19**

(73) Proprietor: **Hangzhou Hikrobot Co., Ltd.
Hangzhou, Zhejiang 310051 (CN)**

(72) Inventor: **TANG, Hengbo
Hangzhou, Zhejiang 310051 (CN)**

(74) Representative: **BRP Renaud & Partner mbB
Rechtsanwälte Patentanwälte
Steuerberater
Königstraße 28
70173 Stuttgart (DE)**

(56) References cited:
CN-A- 105 487 557    CN-A- 107 179 080
CN-A- 107 516 326    CN-A- 109 648 558
US-A1- 2012 101 661    US-A1- 2017 316 701

• **MUÑOZ-SALINAS RAFAEL ET AL: "SPM-SLAM: Simultaneous localization and mapping with squared planar markers", PATTERN RECOGNITION., vol. 86, 1 February 2019 (2019-02-01), GB, pages 156 - 171, XP055923603, ISSN: 0031-3203, DOI: 10.1016/ j.patcog.2018.09.003**
• **TANG HENGBO ET AL: "Automatic Simultaneous Extrinsic-Odometric Calibration for Camera-Odometry System", IEEE SENSORS JOURNAL, IEEE, USA, vol. 18, no. 1, 1 January 2018 (2018-01-01), pages 348 - 355, XP011674024, ISSN: 1530-437X, [retrieved on 20171206], DOI: 10.1109/JSEN.2017.2764125**
• **TANG HENGBO ET AL: "Simultaneous Intrinsic and Extrinsic Calibration of a Visual-Odometric Sensor System", IEEE SENSORS JOURNAL, IEEE, USA, vol. 21, no. 5, 10 December 2020 (2020-12-10), pages 6856 - 6868, XP011835927, ISSN: 1530-437X, [retrieved on 20210204], DOI: 10.1109/JSEN.2020.3043353**
• **LI, YUEHUA ET AL.: "Improved Visual SLAM Algorithm in Factory Environment", ROBOT, vol. 41, no. 1, 31 January 2019 (2019-01-31), pages 95 - 103, XP009533452, ISSN: 1002-0446, DOI: 10.13973/j.cnki.robot.180062**

**Remarks:**
The file contains technical information submitted after the application was filed and not included in this specification

## Description

The present application claims the priority to a Chinese patent application 201910603494.5 filed with the China National Intellectual Property Administration on July 5, 2019 and entitled "METHOD AND APPARATUS FOR ESTABLISHING BEACON MAP ON BASIS OF VISUAL BEACON".

## Technical Field

The present application relates to the field of computational vision, and in particular, to a method and apparatus for constructing a beacon map based on a visual beacon.

## Background

In computational vision, objects (rigid bodies) in space can be described by their position and orientation. Position and orientation are collectively referred to as pose, wherein, position refers to the coordinate positions of an object in a three-dimensional space coordinate system, and orientation refers to the rotation angles of the object relative to the three coordinate axes in this coordinate system, including a pitch angle, a yaw angle and a roll angle.

Visual beacon navigation technology is one of the common robot navigation solutions. A robot realizes positioning based on a beacon map constructed using a visual beacon. Existing visual beacon map construction usually requires physical measurement of the working environment in advance, manual analysis of the position and orientation of the visual beacon to be deployed, i.e., the pose of the visual beacon to be deployed, based on the results of the physical measurement, and deployment of the visual beacon in the environment by relevant personnel based on the pose of the visual beacon to be deployed; thus, when generating a beacon map, the beacon map is formed based on the position and orientation of the visual beacon to be deployed.

The document *SPM-SLAM: Simultaneous localization and mapping with squared planar markers* proposes a real time solution to the problems of simultaneously localizing the camera and building a map of planar markers. It contributes with a number of solutions to the problems arising when solving SLAM from squared planar markers, coining the term SPM SLAM. The experiments carried out show that the method can be more robust, precise and fast, than visual SLAM methods based on keypoints or texture.

The document *Automatic Simultaneous Extrinsic-Odometric Calibration for Camera-Odometry System* focuses on the simultaneous extrinsic-odometric calibration of a mobile robot system equipped with odometric devices and a monocular camera. It proposes a two-step fully automatic calibration algorithm, which does not require any prior knowledge of the un-calibrated parameters. In the first step, both the odometric parameters and the extrinsic ones are estimated through a non-iterative auto initialization process. In the second step, a joint optimization problem is solved iteratively to obtain a refined calibration result. By exploiting the planar motion constraints of the landmark measurements, our auto initialization method outperforms a comparison approach in robustness against the image noise. Experiments are conducted with data sets collected from both simulation and an autonomous guided vehicle system, which validates the improvement.

## SUMMARY

The present application provides a method and apparatus for constructing a beacon map based on a visual beacon, so as to reduce the dependence on the deployment precision of the visual beacon. The specific solutions are as follows.

A first embodiment of the present application provides a method according to independent claim 1.

A second embodiment of the present application provides an electronic device according to independent claim 11.

A third embodiment of the present application provides a computer-readable storage medium according to independent claim 12.

A fourth embodiment of the present application provides a computer program according to independent claim 13.

In the solutions according to the embodiments of the present application, by using target measurement data and target detection data, the problem is optimized through a joint construction by means of an odometer constraint and a beacon observation constraint (at least comprising a constraint of the re-projection of all feature points of the visual beacon on a key frame), and a global pose of the visual beacon is obtained by solving this problem, and thus a beacon map is constructed using the global pose of the visual beacon obtained. As the global pose of the visual beacon used by the solutions according to the present application in map construction is determined by a specific calculation manner, which reduces requirements for the data set for map construction, doesn't not rely on global position or angle information used when deploying the visual beacon, or the type of the visual beacon, or any priori information, while ensures map construction efficiency and precision. It can be seen that the dependence on deployment precision of the visual beacon can be reduced by the present solutions. In addition, as the present solutions do not rely on pose information based on which the visual beacon is deployed, requirements for environment measurement can be reduced or the process of environment measurement can be omitted, and work difficulty of deploying the visual beacon can be reduced, which reduces time and human labor consumption.

BRIEF DESCRIPTION OF THE DRAWINGS

In order to explain the technical solutions of embodiments of the present application and the prior art more clearly, the following briefly introduces the accompanying drawings that need to be used in the embodiments and the prior art. Obviously, the drawings described below are merely some embodiments of the present application, and to those of ordinary skill in the art, other embodiments can be obtained based on those drawings without creative work.

Figure 1 is a flow chart of the visual beacon map construction method according to an embodiment of the present application.

Figure 2 is a schematic view of data acquisition.

Figure 3 shows a schematic view of a correlation relationship of image data involved in the above-described steps 101-110.

Figure 4 is a schematic view of an apparatus for constructing a beacon map based on a visual beacon according to an embodiment of the present application.

**DETAILED DESCRIPTION OF THE INVENTION**

In order to make the purpose, technical solutions, and advantages of the present application clearer, the present application is further described below in detail in reference to the accompanying drawings and embodiments. Obviously, the described embodiments are only some of the embodiments of the present application, rather than all the embodiments. All other embodiments obtained by those of ordinary skill in the art without creative work based on the embodiments in this application shall fall within the scope of protection of the present application.

Existing visual beacon map construction generally requires physical measurement of the working environment in advance, manual analysis of the position and orientation of the visual beacon to be deployed, i.e., the pose of the visual beacon to be deployed, based on the results of the physical measurement, and deployment of the visual beacon in the environment by relevant personnel based on the pose of the visual beacon to be deployed; furthermore, when generating a beacon map, the beacon map is formed based on the position and orientation of the visual beacon to be deployed.

It can be seen that, the main problems of the existing visual beacon map construction method includes: relatively high dependence during map construction on the deployment precision of a visual beacon, once the deployment precision of the visual beacon is relatively low, it undoubtedly causes the accuracy of constructing the map becomes relatively low.

In order to solve the problems of the prior art, the present application provides a method and apparatus for constructing a beacon map based on a visual beacon. The method for constructing a beacon map based on a visual beacon according to the present application is first described below.

In order to make the purpose, technical means, and advantages of the present application clearer, the present application is further described below in detail in reference to the accompanying drawings. In order to facilitate the understanding of embodiments of the present application, the concepts involved are described as follows.

In the present embodiment, a world coordinate system, a video camera coordinate system (a camera coordinate system), a beacon coordinate system, an odometer coordinate system, and a robot body coordinate system are involved, wherein,

A world coordinate system is an absolute coordinate system of a system, a reference coordinate system being chosen in an environment to describe the position of a video camera and any object in the environment;

A video camera coordinate system is a space Cartesian coordinate system formed with the optical center of a video camera as the origin, the x and y axes being parallel to the X and Y axes of an image, and the z axis being the optical axis of the video camera and perpendicular to the imaging plane, which is also referred to as a camera coordinate system, and the video camera coordinate system is a three-dimensional coordinate system. The intersection between the optical axis and an image plane is the origin of an image coordinate system, and the Cartesian coordinate system formed by the origin and the X and Y axes of an image is the image coordinate system, and the image coordinate system is a two-dimensional coordinate system.

A beacon coordinate system is used for describing the three-dimensional spatial position of a feature point in a visual beacon, for example, the position of positioning feature points located at the four corners of a two-dimensional code. Each visual beacon has respectively its own beacon coordinate system.

A robot body coordinate system is: a coordinate system set for the body of a robot. The origin of the robot body coordinate system may coincide with the center of the robot, but of course, is not limited thereto.

An odometer coordinate system is a coordinate system used for describing the movement of a robot body in a two-dimensional plane and is determined by the pose of the robot body at an initial moment of starting to calculate the pose. It should be emphasized that the odometer coordinate system is a robot body coordinate system at the initial moment and used for reflecting measurements of the relative movement of the robot, that is, the relative pose of the robot body coordinate system regarding the odometer coordinate system at a subsequent moment after the initial moment, specifically: the pose variation value of the pose of the robot body at the subsequent moment (the pose in the robot body coordinate system) relative to the pose of the robot body at the initial moment. As an example, the initial moment may be: the moment the robot starts, or any moment during the course of the robot's movement.

An odometer is a cumulative positioning algorithm for a moving robot and have various implementations based on different sensors used and mechanical structures, its output result being the pose of a robot in the two-dimensional plane of an odometer coordinate system.

Below, "local" and "global" are opposing concepts, global referring to a world coordinate system, and local referring to a non-world coordinate system.

PnP, also known as Perspective-n-Point, calculates the pose of a camera by means of the coordinates of a set of feature points (n points) in an image and their three-dimensional positions, n points are at least 4 different feature points.

In order to solve the problems of the prior art, the present application provides a method for constructing a beacon map based on a visual beacon. In order to construct a beacon map, a certain number of visual beacon(s) are pre-deployed in random in a physical environment for which a beacon map is to be constructed, the visual beacon comprising a feature point for positioning. The method for constructing a beacon map based on a visual beacon may comprise the following steps:

   acquiring target detection data at least comprising an image frame, and target measurement data, the image frame being an image acquired by a robot during the process of performing image acquisition on a pre-deployed visual beacon, and the target measurement data comprising: the pose of a robot body of the robot in an odometer coordinate system at the moment the image frame is acquired;

   obtaining an initialization result for a first-type pose corresponding to the image frame based on the target measurement data, the first-type pose being the pose of the robot body in a world coordinate system at the moment the image frame is sampled;

   obtaining an initialization result for a second-type pose corresponding to the visual beacon based on the target detection data, the second-type pose being the pose of the visual beacon in the world coordinate system;

   performing joint optimization on a first-type residual regarding the image frame obtained based on the target measurement data and a second-type residual regarding the image frame and the visual beacon obtained based on the target detection data, by using the first-type pose as a state variable and the second-type pose as a state variable, so as to obtain an optimization result for the second-type pose, the first-type residual is a constrained residual regarding the odometer of the image frame, and the second-type residual is the constrained residual of the re-projection of a feature point of the visual beacon on the image frame, the initial value of the first-type pose being the initialization result for the first-type pose, the initial value of the second-type pose being the initialization result for the second-type pose; and

   constructing a beacon map based on the optimization result for the second-type pose obtained.

In this embodiment, the number of the image frame may be one or more.

In the solutions according to the embodiments of the present application, by using target measurement data and target detection data, the problem is optimized through a joint construction by means of an odometer constraint and a beacon observation constraint (at least comprising a constraint of the re-projection of all feature points of the visual beacon on a key frame), and a global pose of the visual beacon is obtained by solving this problem, and thus a beacon map is constructed using the global pose of the visual beacon obtained. As the global pose of the visual beacon used by the solutions according to the present application in map construction is determined by a specific calculation manner, which reduces requirements for the data set for map construction, doesn't not rely on global position or angle information used when deploying the visual beacon, or the type of the visual beacon, or any priori information, while ensures map construction efficiency and precision. It can be seen that the dependence on deployment precision of the visual beacon can be reduced by the present solutions. In addition, as the present solutions do not rely on pose information based on which the visual beacon is deployed, requirements for environment measurement can be reduced or the process of environment measurement can be omitted, and work difficulty of deploying the visual beacon can be reduced, which reduces time and human labor consumption.

Optionally, in an implementation, after obtaining an initialization result for a second-type pose corresponding to the visual beacon based on the target detection data, the method further comprises:

obtaining a third-type residual regarding the visual beacon, the third-type residual is a constrained residual of the local position of the visual beacon in the image frame;

performing joint optimization on the first-type residual and the third-type residual by using the first-type pose as a state variable and the global position in the second-type pose as a state variable, so as to obtain a preliminary optimization result for the first-type pose and a preliminary optimization result for the global position in the second-type pose, the initial value of the first-type pose is the initialization result for the first-type pose, and the initial value of the global position in the second-type pose is the initialization result for the global position in the second-type pose;

taking the preliminary optimization result for the first-type pose as the initialization result for the first-type pose;

taking the preliminary optimization result for the global position in the second-type pose as the initialization result for the global position in the second-type pose;

obtaining a global orientation in the second-type pose corresponding to a visual beacon based on the target detection data comprises:
obtaining an initialization result for the global orientation in the second-type orientation corresponding to the visual beacon, based on a camera pose corresponding to the image frame to which the visual beacon belongs when the visual beacon is observed for the first time, and the target detection data.

Optionally, in an implementation, there are a plurality of image frames;
performing joint optimization by using the first-type pose as a state variable and the global position in the second-type pose as a state variable, so as to obtain a preliminary optimization result for the first-type pose and a preliminary optimization result for the global position in the second-type pose, may comprise:
constructing a first target function that merges each first-type residual and each third-type residual, and obtaining a preliminary optimization result for each first-type pose and a preliminary optimization result for the global position in each second-type pose that minimize the first target function, by iterations using the initialization result for each first-type pose and the initialization result for the global position in each second-type pose as initial iteration values.

Optionally, in an implementation, there are a plurality of image frames;
performing joint optimization by using the first-type pose as a state variable and the second-type pose as a state variable, so as to obtain an optimization result for the second-type pose, may comprise:
constructing a second target function that merges each first-type residual and each second-type residual, and obtaining an optimization result for each second-type pose that minimizes the second target function by iteration using the initialization result for each first-type pose and the initialization result for each second-type pose as initial iteration values.

Optionally, in an implementation, the process of obtaining a first-type residual regarding the image frame based on the target measurement data may comprise:

for each image frame, obtaining a first-type relative pose and a second-type relative pose between the image frame and an image frame adjacent to the image frame, the first-type relative pose and the second-type relative pose are both varied poses of a robot body at a moment the image frame is acquired relative to a moment the adjacent image frame is acquired; the first-type relative pose is determined based on the state variable of the first-type pose, and the second-type relative pose is determined based on the target measurement data;

calculating a first-type residual of the image frame from the difference between the first-type relative pose and the second-type relative pose;

adding up the first-type residual of each image frame, obtaining a first-type residual of all image frames.

Optionally, in an implementation, the process of obtaining a third-type residual regarding the visual beacon may comprise:

for any visual beacon in each image frame, obtaining the difference between the local position of the visual beacon in a camera coordinate system corresponding to the image frame and the observed measurement value of the visual beacon, obtaining a third-type residual of the visual beacon;

adding up the third-type residual of each visual beacon, obtaining a third-type residual of all visual beacons;

the local position of the visual beacon in a camera coordinate system corresponding to the image frame is obtained by a camera external parameter pose corresponding to the visual beacon, a current state vector of the first-type pose corresponding to the image frame, and a current state vector of the global position in the second-type pose corresponding to the visual beacon; the current state vector of the first-type pose corresponding to the image frame being the initialization result for the first-type pose corresponding to the image frame in the first iteration, the current state vector of the global position in the second-type pose corresponding to the visual beacon being the vector of the initialization result for the global position in the second-type pose corresponding to the visual beacon in the first iteration.

Optionally, in an implementation, determining of obtaining a second-type residual regarding the image frame and the visual beacon based on the target detection data may comprise:
for each image frame, obtaining a constrained residual of the re-projection of all feature points of all visual beacons located in the image frame on the image frame, based on a current state variable of the second-type pose corresponding to each visual beacon in the image frame, and the target detection data.

Optionally, in an implementation, for each image frame, obtaining a constrained residual of the re-projection of all feature points of all visual beacons located in the image frame on the image frame, based on a current state variable of the second-type pose corresponding to each visual beacon in the image frame, and the target detection data, may comprise:

for any feature point that any visual beacon in each image frame has, obtaining a re-projection error of the feature point in the visual beacon on the image frame, based on a camera internal parameter matrix, a current state variable of the first-type pose corresponding to the image frame, a current state variable of the second-type pose corresponding to the visual beacon, and the difference between a projection function of the local position of the feature point in a beacon coordinate system and a measurement of an image coordinate of the feature point,

adding up the re-projection error of each feature point of each visual beacon, obtaining a constrained residual regarding the re-projection of all feature points of all visual beacons on the image frame.

Optionally, in an implementation, obtaining an initialization result for the first-type pose corresponding to the image frame based on the target measurement data may comprise:

taking the pose of a robot body of the robot in an odometer coordinate system at the moment the image frame is acquired, as the initialization result for the first-type pose corresponding to the image frame;

obtaining an initialization result for the second-type pose corresponding to the visual beacon based on the target detection data may comprise:

for any visual beacon in the image frame, obtaining respectively an initialization result for the position of the visual beacon in a world coordinate system and an initialization result for the orientation of the visual beacon in the world coordinate system, by means of a camera pose corresponding to the image frame to which the visual beacon belongs when the visual beacon is observed for the first time, and the target detection data;

visual beacon detection data comprises an observed measurement value of the visual beacon obtained from a local pose of the visual beacon relative to a camera coordinate system;

the local pose of the visual beacon relative to a camera coordinate system is obtained based on an image coordinate of a feature point in the visual beacon, a camera internal parameter, and a beacon parameter;

the camera pose corresponding to the image frame to which the visual beacon belongs is: the camera pose of the camera when it acquires the image frame to which the visual beacon belongs.

Optionally, in an implementation, for any visual beacon in the image frame, obtaining respectively an initialization result for the position of the visual beacon in a world coordinate system and an initialization result for the orientation of the visual beacon in the world coordinate system, by means of a camera pose corresponding to the image frame to which the visual beacon belongs when the visual beacon is observed for the first time, and the target detection data, comprises:

for any visual beacon in the image frame, obtaining an initialization result for the position of the visual beacon in a world coordinate system, based on a vector of the first-type pose corresponding to the image frame, a pose vector of a camera external parameter, and a vector of an observed measurement value, a camera pose corresponding to the image frame to which the visual beacon belongs when the visual beacon is observed for the first time is obtained based on the vector of the first-type pose corresponding to the image frame to which the visual beacon belongs and the pose vector of the camera external parameter;

obtaining an initialization result for the orientation of the visual beacon in the world coordinate system based on a global rotation vector in a robot body coordinate system, a rotation vector of the camera external parameter, and a local rotation vector of the visual beacon in a camera coordinate system;

the global rotation vector in the robot body coordinate system is obtained from the initialization result for the first-type pose, the rotation vector of the camera external parameter is obtained from the camera external parameter, and the local rotation vector of the visual beacon in a camera coordinate system is obtained from the local pose of the visual beacon relative to the camera coordinate system.

Optionally, in an implementation, obtaining target detection data at least comprising an image frame, and target measurement data may comprise: acquiring at least once an image of each visual beacon deployed in a physical environment for which a beacon map is to be constructed, obtaining target detection data at least comprising an image frame; performing measurement on the target measurement data at the same moment the image frame is acquired.

Optionally, in an implementation, there are a plurality of image frames;

after acquiring target detection data at least comprising an image frame, and target measurement data, the method further comprises: selecting key frames from a plurality of image frames according to any of the following conditions or a combination thereof:

when a beacon image exists in a current frame, then the frame is taken as a key frame;

when the position translation offset between the measurement of a current frame regarding odometer and the measurement of an existing key frame regarding odometer is larger than a set translation threshold, then the current frame is taken as a key frame;

when the rotation offset between the measurement of a current frame regarding odometer and the measurement of an existing key frame regarding odometer is larger than a set rotation threshold, then the current frame is taken as a key frame;

the first frame is a key frame;

obtaining an initialization result for the first-type pose corresponding to the image frame based on the target measurement data comprises:

obtaining an initialization result for the first-type pose corresponding to a key frame based on the target measurement data;

the first-type residual regarding the image frame obtained based on the target measurement data comprises:

a first-type residual regarding the key frame obtained based on the target measurement data;

the second-type residual is a constrained residual of the re-projection of a feature point of the visual beacon on the key frame.

For clarity of the solutions, various steps in the method for constructing a beacon map based on a visual beacon according to the present application is described in detail below using an example in which a key frame is used as an image used for map construction. It should be noted that, when key frames are not used, an image used for map construction is an image frame in raw data, and the various steps in the map construction process are similar to the corresponding steps when key frames are used for map construction.

In order to construct a beacon map, a certain number of visual beacon(s) are randomly deployed in a physical environment for which a beacon map is constructed, and the visual beacon comprises a feature point used for positioning.

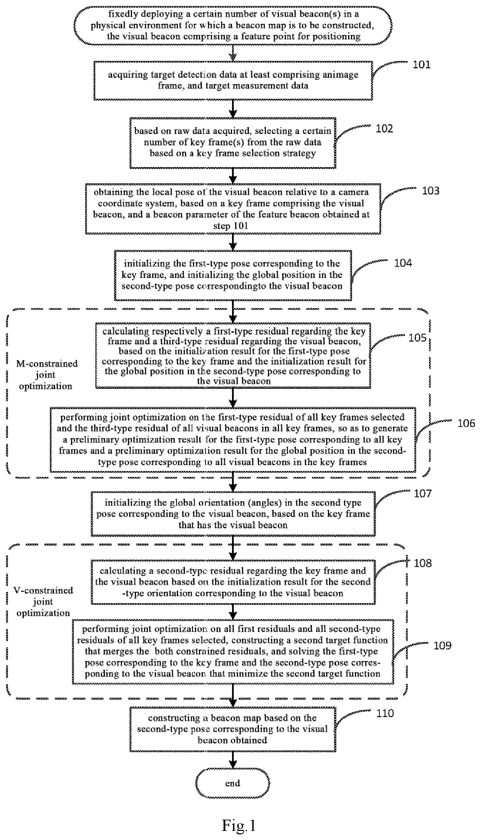

In reference to Figure 1, Figure 1 is a flow chart of a method for constructing a beacon map based on a visual beacon according to an embodiment of the present application. The method comprises:

Step 101, obtaining target detection data at least comprising an image frame, and target measurement data.

The image frame is an image acquired by a robot during the process of performing image acquisition on a pre-deployed visual beacon, and the target measurement data comprises: the pose of a robot body of the robot in an odometer coordinate system at the moment the image frame is acquired. It can be understood that, the number of the image frame comprised in the target detection data may be one or more, and at least an image regarding the visual beacon exists in the image frame(s) comprised in the target detection data; correspondingly, the target measurement data comprise the pose of the robot body of the robot in the odor coordinate system at the moment one or more image frame is acquired.

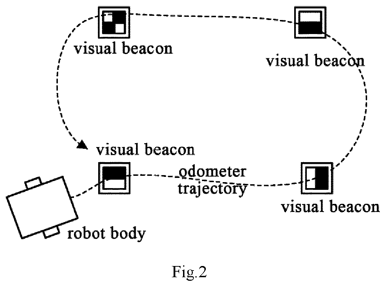

In reference to Figure 2, Figure 2 is a schematic view of data acquisition. The robot is controlled to move, so that the robot performs image acquisition of each visual beacon deployed in the physical environment for which a beacon map is to be constructed by means of at least one camera, and each visual beacon is acquired at least once; target detection data at least comprising an image frame is obtained via image acquisition; and, target measurement data are obtained by means such as a wheel encoder, the target measurement data at least comprise measurement data regarding the odometer of the robot body at the moment the image frame is acquired, the measurement data regarding the odometer being specifically the pose of the robot body in the odometer coordinate system. There is no limit on the moving trajectory of the robot so long as all visual beacon(s) are acquired at least once; as shown in Figure 2, a total of 4 visual beacons are deployed, and the moving trajectory of the robot is an odometer trajectory.

Thus, raw data acquired during the process of data acquisition comprises target measurement data and target detection data, the target measurement data comprises the pose of the robot body in the odometer coordinate system; the target detection data comprises the image frame acquired, the beacon **ID** of the visual beacon, and an image coordinate of each feature point of the visual beacon.

In addition, system parameters may be obtained in advance, comprising: camera internal parameters (the position of an optical center, the focal length of a lens, a distortion coefficient, etc.), camera external parameters (the relative pose of the camera relative to the robot body), and beacon parameters (the local coordinate position of each feature point in a beacon coordinate system).

In the process of acquiring image data regarding the visual beacon, an image frame without the visual beacon and measurement data of the image frame are generally also acquired, and such data may also belong to the target detection data and the target measurement data, forming raw data acquired.

Step 102, based on raw data acquired, selecting a certain number of key frame(s) from the raw data based on a key frame selection strategy.

Considering the computation efficiency, selection may be performed in raw data, so as to select key frames from the image frames comprised in a large amount of raw data, thus improving beacon map constructing efficiency.

There may be various key frame selection strategies. One strategy in the present embodiment is:

when a beacon image exists in a current frame, then the frame is taken as a key frame; and/or

when the position translation offset between the measurement of a current frame regarding odometer and the measurement of an existing key frame regarding odometer is larger than a set translation threshold, then the current frame is taken as a key frame, so that the translation offset regarding the odometer between adjacent key frames is larger than the set translation threshold; and/or;

when the rotation offset between the measurement of a current frame regarding odometer and the measurement of an existing key frame regarding odometer is larger than a set rotation threshold, then the current frame is taken as a key frame, so that the rotation offset regarding the odometer between adjacent key frames is larger than the set rotation threshold; and/or

the first frame is a key frame.

It can be understood that, in a specific application, a specific key frame selection manner may comprise: if a beacon image exists in a current frame, then the frame is taken as a key frame; and, key frames are selected based on any of the following conditions or a combination thereof:

when the position translation offset between the measurement of a current frame regarding odometer and the measurement of an existing key frame regarding odometer is larger than a set translation threshold, then the current frame is taken as a key frame;

when the rotation offset between the measurement of a current frame regarding odometer and the measurement of an existing key frame regarding odometer is larger than a set rotation threshold, then the current frame is taken as a key frame;

the first frame is a key frame.

Thus, the key frames selected comprise key frames that have a beacon image and key frames that do not have a beacon image.

The measurement regarding the odometer of a current frame means the pose of the robot body in the odometer coordinate system at the moment the current frame is acquired, and the measurement regarding the odometer of a key frame means the pose of the robot body in the odometer coordinate system at the moment the key frame is acquired. In other words, the measurement regarding the odometer of any frame is specifically the pose of the robot body in the odometer coordinate system at the moment the frame is acquired.

Step 103, obtaining the local pose of the visual beacon relative to a camera coordinate system, based on a key frame comprising the visual beacon, and a beacon parameter of the feature beacon obtained at step 101, and adding the local pose into the target detection data as an observed measurement value of the visual beacon. The beacon parameter of the visual beacon comprises the local coordinate position of each feature point in a beacon coordinate system.

In this step, the local pose of the visual beacon relative to a camera coordinate system specifically means the pose of the visual beacon in the camera coordinate system. Solving the local pose of the visual beacon relative to the camera coordinate system essentially is to solve a PnP (Perspective-n-Point) problem, i.e., obtaining the local pose of the visual beacon relative to the camera coordinate system based on an image coordinate of a feature point of the visual beacon, a camera internal parameter, and a beacon parameter. Taking into account that the requirements for the number of feature points for solving the PnP problem, there are at least 4 feature points in the present application.

Step 104, initializing the first-type pose corresponding to the key frame, and initializing the global position in the second-type pose corresponding to the visual beacon, obtaining an initialization result for the first-type pose corresponding to the key frame and an initialization result for the global position in the second-type pose corresponding to the visual beacon, the first-type pose corresponding to the key frame is the pose of the robot body in a world coordinate system at the moment the key frame is acquired, and the second-type pose corresponding to the visual beacon is the pose of the visual beacon in the world coordinate system.

The initialization of the first-type pose corresponding to the key frame directly uses measurement data results, i.e., the pose of the robot body in the odometer coordinate system at the moment the key frame comprised in the target measurement data is acquired. The initialization result for the global position in the second-type pose corresponding to the visual beacon is obtained by calculating the camera pose corresponding to the key frame the visual beacon is in when the visual beacon is observed for the first time and the observed measurement value of the visual beacon comprised in the target detection data, the camera pose corresponding to the key frame to which the visual beacon belongs is : the camera pose when the camera obtains the key frame to which the visual beacon belongs.

The specific calculation formula may be as follows:

$$ {}^{w}_{m}p = {}^{w}_{b}\xi \oplus {}^{b}_{c}\xi \odot {}^{c}_{m}p \qquad (1) $$

the subscripts and superscripts on the left of symbols are coordinate system indicators,

${}^{w}_{m}p$  is the vector of the global position of the visual beacon in a world coordinate system (the coordinate position relative to a world coordinate system w of the visual beacon in a beacon coordinate system m), i.e., the initialization result for the global position of the visual beacon in the world coordinate system;

${}^{w}_{b}\xi$  is the vector of the first-type pose corresponding to the key frame to which the visual beacon belongs (the pose relative to the world coordinate system w of the robot body at the moment the key frame is acquired in the robot coordinate system b), and may be expressed as

$$ {}^{w}_{b}\xi = \begin{bmatrix} {}^{w}_{b}\rho \\ {}^{w}_{b}\phi \end{bmatrix}, $$

${}^{w}_{b}\phi$  is the global rotation vector of the robot body in the world **coordinate** system,  ${}^{w}_{b}\rho$  is the global position vector of the robot body in the world coordinate system, $_b^w\zeta$ being obtained by performing a conversion from a two-dimensional space to a three-dimensional space on the global pose vector $_b^w\zeta$ of the robot body, the global pose vector of the robot body may be expressed as $_b^w\zeta = \begin{bmatrix} _b^wx \\ _b^wy \\ _b^w\theta \end{bmatrix}$, $_b^w\theta$ is the yaw angle of the robot body; the target measurement data are used as the initial value of the vector of the first-type pose corresponding to the key frame to which the visual beacon belongs,

$_c^b\zeta$ is the pose vector of a camera external parameter (the position of the camera in the camera coordinate system c relative to the robot coordinate system b), and may be expressed as $_c^b\zeta = \begin{bmatrix} _c^b\rho \\ _c^b\phi \end{bmatrix}$, $_c^b\phi$ is the rotation vector of a camera external parameter, and $_c^b\rho$ is the position vector of a camera external parameter;

$_m^cp$ is the vector of the local position of the visual beacon relative to the camera coordinate system (the coordinate position of the visual beacon in the beacon coordinate system m relative to the camera coordinate system c, i.e., the observed measurement value), which is obtained from step 103, and may be expressed as $_m^cp = \begin{bmatrix} _m^cx \\ _m^cy \\ _m^cz \end{bmatrix}$;

The symbol ⊕ represents right multiplication, for example, $_B^A\xi \oplus _C^B\xi = _C^A\xi$ and $_B^A\zeta \oplus _C^B\zeta = _C^A\zeta$; the symbol ⊙ represents projection, for example, $_B^A\xi \odot _M^B\mathbf{p} = _M^A\mathbf{p}$; from $_b^w\zeta \oplus _c^b\xi$, the camera pose corresponding to the key frame to which the visual beacon belongs when the visual beacon is observed for the first time.

Step 105, calculating respectively a first-type residual regarding the key frame and a third-type residual regarding the visual beacon, based on the initialization result for the first-type pose corresponding to the key frame and the initialization result for the global position in the second-type pose corresponding to the visual beacon, the third-type residual being referred to as the M constrained residual for short in the present application, the first-type residual is a constrained residual regarding the odometer of the key frame, and the third-type residual is a constrained residual of the local position of the visual beacon in the key frame;

for the first-type residual of any key frame i, there are a first-type relative pose between adjacent key frames and a second-type relative pose between adjacent key frames, the first-type relative pose and the second-type relative pose are both the pose variation of the robot body at the moment the key frame is acquired relative to the moment an adjacent key frame is acquired; the first-type relative pose is determined based on a state variable of the first-type pose and the second-type relative pose is determined based on the target measurement data. As an example,

in one implementation, the difference between the first-type relative pose and the second-type relative pose of adjacent key frames is calculated, for example, the value of the difference between the two, which may be expressed as:

$$e_{o,\langle i\rangle} = \left( _{b_i}^w\zeta^{-1} \oplus _{b_{i+1}}^w\zeta \right) - \left( _{b_i}^o\zeta^{-1} \oplus _{b_{i+1}}^o\zeta \right)$$

$e_{o,\langle i\rangle}$ represents a residual item of the first-type residual of key frame i, $_{b_i}^w\zeta^{-1}$ represents the vector of the first-type pose corresponding to key frame i, $_{b_{i+1}}^w\zeta$ represents the vector of the first-type pose corresponding to key frame i + 1 adjacent to key frame i, $_{b_i}^o\zeta^{-1}$ represents the pose of the robot body in the odometer coordinate system at the moment key frame i is acquired, $_{b_{i+1}}^{o}\zeta$ represents the pose of the robot body in the odometer coordinate system at the moment key frame i + 1 is acquired, the first-type relative pose between adjacent key frames is obtained from $_{b_i}^{w}\zeta^{-1} \oplus _{b_{i+1}}^{w}\zeta$ , and the second-type relative pose between adjacent key frames is obtained from ( $_{b_i}^{o}\zeta^{-1} \oplus _{b_{i+1}}^{o}\zeta$ ).

The process of obtaining a third-type residual regarding the visual beacon in the key frame comprises: for each visual beacon j in any key frame i, the constrained residual of the local position of the visual beacon j is: the difference between the local position of the visual beacon in the camera coordinate system corresponding to the key frame that the visual beacon is in and the observed measurement value of the visual beacon. Specifically: the local position of the visual beacon in the camera coordinate system corresponding to the key frame that the visual beacon is in is obtained by a camera external parameter pose corresponding to the visual beacon, a current state vector of the first-type pose corresponding to the key frame (the key frame to which the visual beacon belongs), and a current state vector of the global position in the second-type pose corresponding to the visual beacon; the current state vector of the first-type pose corresponding to the key frame in the first iteration is: the initialization result for the first-type pose corresponding to the key frame; the current state vector of the global position in the second-type pose corresponding to the visual beacon in the first iteration is: the vector of the initialization result for the global position in the second-type pose corresponding to the visual beacon.

As an example, one implementation may be, the difference between the local position of the visual beacon in the camera coordinate system corresponding to the key frame that the visual beacon is in and the observed measurement value of the visual beacon may be expressed as:

$$e_{m,\langle i,j\rangle} = \left(_{b_i}^{w}\xi \oplus _{c}^{b}\xi\right)^{-1} \odot _{m_j}^{w}p - _{m_j}^{c_i}p \qquad (2)$$

$e_{m,\langle i,j\rangle}$ represents a constrained residual of the local position of visual beacon j in key frame i, $_{m_j}^{w}p$ is the vector of the global position in the second-type pose corresponding to the visual beacon j, its initial value being obtained from the initialization result for the second-type pose at step 104, and $_{m_j}^{c_i}p$ represents the vector of the observed measurement value of the visual beacon j in the key frame i, the local position of the visual beacon j in the camera coordinate system corresponding to the key frame i that the visual beacon is in is obtained from $\left(_{b_i}^{w}\xi \oplus _{c}^{b}\xi\right)^{-1} \odot _{m_j}^{w}p$ .

Step 106, performing joint optimization on the first-type residual of all key frames selected and the third-type residual of all visual beacons in all key frames, so as to generate a preliminary optimization result for the first-type pose corresponding to all key frames and a preliminary optimization result for the global position in the second-type pose corresponding to all visual beacons in the key frames, providing an initial value for subsequent joint optimization constrained by beacon feature point image re-projection;

in this step, using a iterative optimization algorithm, such as the LM (Levenberg-Marquardt) algorithm, a first target function that merges that above-described constrained residuals is constructed, based on the first-type residual of all key frames selected and the third-type residual of all visual beacons, by performing multiple times of iterative convergence on the initialization result for the first-type pose corresponding to the key frame and the initialization result for the global position in the second-type pose corresponding to the visual beacon in the key frame as the initial values, the first-type pose corresponding to the key frame and the global position in the second-type pose in the key frame being state variables in the iterative process, i.e., an optimized state variable is composed of two parts, the first-type pose, and the global position in the second-type pose; a first-type pose and a global position in the second-type pose that minimize the first target function are solved. The first target function may be expressed as:

$$M(x) = \sum_{i=1}^{N} e_{o,\langle i \rangle}^{T} \cdot \Omega_{o,\langle i \rangle} \cdot e_{o,\langle i \rangle} + \sum_{\langle i,j \rangle \in \mathcal{C}} e_{m,\langle i,j \rangle}^{T} \cdot \Omega_{m,\langle i,j \rangle} \cdot e_{m,\langle i,j \rangle}$$

where,

$$\mathbf{x} = \begin{bmatrix} \mathbf{x}_k \\ \mathbf{x}_m \end{bmatrix}, \text{where} \begin{cases} \mathbf{x}_k^T = \begin{bmatrix} {}_{b_1}^{w}\boldsymbol{\zeta}^T & \cdots & {}_{b_N}^{w}\boldsymbol{\zeta}^T \end{bmatrix} \\ \mathbf{x}_m^T = \begin{bmatrix} {}_{m_1}^{w}p^T & \cdots & {}_{m_M}^{w}p^T \end{bmatrix} \end{cases},$$

$x_k$ is the first-type pose corresponding to the key frame, $x_m$ is the second-type pose corresponding to the visual beacon; N are all key frames, M is the number of all visual beacons in all key frames;

$\Omega_{o,\langle i \rangle}$ is a constrained information matrix corresponding to the first-type residual of key frame i, $\Omega_{m,\langle i,j \rangle}$ is a constrained information matrix corresponding to the third-type residual of visual beacon j in key frame i, the values of an information matrix being related to a system error model and generally determined manually. $\sum_{i=1}^{N} e_{o,\langle i \rangle}^{T} \cdot \Omega_{o,\langle i \rangle} \cdot e_{o,\langle i \rangle}$ represents adding up the first-type residual of all key frames N selected, and

$$\sum_{\langle i,j \rangle \in \mathcal{C}} e_{m,\langle i,j \rangle}^{T} \cdot \Omega_{m,\langle i,j \rangle} \cdot$$

$e_{m,\langle i,j \rangle}$ represents adding up the third-type residual of all visual beacons j in a set C, the set C being composed of key frame i that has any visual beacon j. In the process of optimization, in the first iteration, the initial value of the state variable of the first-type pose corresponding to the key frame is the initialization result for the first-type pose corresponding to the key frame obtained at the step 104, and the initial value of the state variable of the global position in the second-type pose corresponding to the visual beacon is the initialization result for the global position in the second-type pose corresponding to the visual beacon obtained at the step 104; in the process of iteration after the first iteration, the state variables solved in a previous iteration are used as current state variables to solve optimized state variables in each current iteration.

By means of the joint optimization at step 106, the first-type pose corresponding to the key frame and the global position in the second-type pose corresponding to the visual beacon can be made to have better robustness, making it harder to be trapped in a local minimum during the process of iteration and facilitating the improvement of the efficiency of subsequent joint optimization constrained by beacon feature point image re-projection.

Step 107, initializing the global orientation (angles) in the second-type orientation corresponding to the visual beacon, based on the key frame that has the visual beacon;

the initialization of the global orientation (angles) in the second-type orientation corresponding to the visual beacon is realized by calculation based on the camera pose corresponding to the key frame to which the visual beacon belongs when the visual beacon is observed for the first time and the observed measurement value comprised in the target detection data, and may be expressed as:

$$_{m}^{w}\phi = {}_{b}^{w}\phi \oplus {}_{c}^{b}\phi \oplus {}_{m}^{c}\phi \qquad (3)$$

${}_{m}^{w}\phi$ is the global rotation vector corresponding to the visual beacon (the rotation angles of the beacon coordinate system m relative to the world coordinate system w), i.e., the global orientation in the second-type orientation corresponding to the visual beacon, ${}_{b}^{w}\phi$ is the global rotation vector of the robot body coordinate system (the rotation angles of the robot body coordinate system b relative to the world coordinate system w), ${}_{c}^{b}\phi$ is the rotation vector of a camera external parameter (the rotation angles of the camera coordinate system c relative to the robot body coordinate system b), and ${}_{m}^{c}\phi$ is the local rotation vector of the visual beacon in the camera coordinate system (the rotation angles of the beacon coordinate system m relative to the camera coordinate system c), which is obtained from the local pose of the visual beacon relative to the camera coordinate system obtained at step 103.

Step 108, calculating a second-type residual regarding the key frame and the visual beacon based on the initialization result for the second-type orientation corresponding to the visual beacon, the second-type residual regarding the visual beacon being a residual constrained by the re-projection of a feature point in the visual beacon on the key frame, which may be expressed as:

$$e_{v,\langle i,j,k\rangle} = \text{proj}\left(A, \left({}^{w}_{b_i}\xi \oplus {}^{b}_{c}\xi\right)^{-1} \oplus {}^{w}_{m_j}\xi \odot {}^{m_j}_{f_k}p\right) - {}^{c_i}_{f_k}u$$

$e_{v,\langle i,j,k\rangle}$ is a residual constrained by the re-projection of all feature points k of beacon j in key frame i on the key frame, i.e., the second-type residual regarding the key frame and the visual beacon, proj(.) is an image projection function, A is a camera internal parameter matrix, ${}^{m_j}_{f_k}p$ is the local position vector of feature point k in visual beacon j (the coordinate position of feature point k in an image coordinate system f relative to beacon j in the beacon coordinate system m, i.e., a beacon parameter), ${}^{c_i}_{f_k}u$ is the vector of the local position of feature point k in a camera image (the image coordinate position of feature point k in the image coordinate system f relative to key frame i in the camera coordinate system c, i.e., the image coordinate measurement of feature point k), and ${}^{w}_{m_j}\xi$ is the initial value of the second-type pose of visual beacon j, which is obtained from the initialization result for the global orientation (angles) of the visual beacon at step 107 and the preliminary optimization result for the global position obtained at step 106.

Step 109, performing joint optimization on all first residuals and all second-type residuals selected, constructing a second target function that merges the both constrained residuals, and solving the first-type pose corresponding to the key frame and the second-type pose corresponding to the visual beacon that minimize the second target function.

Multiple times of iterative convergence are performed, by the initial value of the first-type pose corresponding to the key frame and the initial value of the second-type pose corresponding to the visual beacon, using an iterative optimization algorithm for a nonlinear optimization problem, such as the LM (Levenberg-Marquardt) algorithm, by using the preliminary optimization result for the first-type pose corresponding to the key frame obtained at step 106 as the initial value of the first-type pose corresponding to the key frame, and the preliminary optimization result for the global position in the second-type pose corresponding to the visual beacon obtained at step 106, and the result for the global orientation in the second-type pose corresponding to the visual beacon obtained at step 107 as the initial value of the second-type pose corresponding to the visual beacon, the first-type orientation corresponding to the key frame and the second-type pose corresponding to the visual beacon (global position ${}^{w}_{m}p$ and global pose ${}^{w}_{m}\phi$) being state variables in the process of iteration, i.e., the optimized state variable being composed of two parts, the first-type orientation corresponding to the key frame and the second-type pose corresponding to the visual beacon; the first-type pose corresponding to the key frame and the second-type pose corresponding to the visual beacon that minimize the second target function are solved. The second target function may be expressed as:

$$V(x) = \sum_{i=1}^{N} e_{o,\langle i\rangle}^{T} \cdot \Omega_{o,\langle i\rangle} \cdot e_{o,\langle i\rangle} + \sum_{\langle i,j,k\rangle \in \mathcal{C}} e_{v,\langle i,j,k\rangle}^{T} \cdot \Omega_{v,\langle i,j,k\rangle} \cdot e_{v,\langle i,j,k\rangle}$$

where,

$$\mathbf{x} = \begin{bmatrix} \mathbf{x}_k \\ \mathbf{x}_m \end{bmatrix}, \text{wherein} \begin{cases} \mathbf{x}_k^T = \begin{bmatrix} {}^{w}_{b_1}\zeta^T & \cdots & {}^{w}_{b_N}\zeta^T \end{bmatrix} \\ \mathbf{x}_m^T = \begin{bmatrix} {}^{w}_{m_1}\xi^T & \cdots & {}^{w}_{m_M}\xi^T \end{bmatrix} \end{cases}$$

In this formula, the residual item of the first-type residual is consistent with the first-type residual at step 106, $e_{v,\langle i,j,k\rangle}$ is the residual constrained by the re-projection of feature point k of visual beacon j in key frame i on the key frame, i.e., the second-type residual regarding key frame i and visual beacon j, $\Omega_{v,\langle i,j,k\rangle}$ is an information matrix corresponding to a V constrained residual, i.e., an information matrix corresponding to the second-type residual regarding key frame i and visual beacon j, and $\sum_{\langle i,j,k \rangle \in C} e_{v,\langle i,j,k \rangle}^{T} \cdot \Omega_{v,\langle i,j,k \rangle} \cdot e_{v,\langle i,j,k \rangle}$ represents adding up V constrained residuals of all feature points k in all visual beacons j.

In the process of optimization, in the first iteration, the initial value of the state variable of the first-type pose corresponding to the key frame is the initialization result for the first-type pose corresponding to the key frame obtained at step 104, and the initial value of the state variable of the global position in the second-type pose corresponding to the visual beacon is the initialization result for the global position in the second-type pose corresponding to the visual beacon obtained at step 104; in the process of iteration after the first iteration, the state variables solved in a previous iteration are used as current state variables to solve optimized state variables in each current iteration.

Step 110, constructing a beacon map based on the second-type pose corresponding to the visual beacon obtained.

In the above-described steps, a distributed joint optimization strategy is used where the global position of the visual beacon is estimated by M constrained joint optimization first and then the global pose of the visual beacon is estimated by executing V constrained joint optimization, reducing the probability that the optimization algorithm is trapped in a local minimum. Of course, the joint optimization on the first-type residual of a key frame and the M constrained residual regarding the visual beacon may not be executed. Thus, the initialization result for the first-type pose corresponding to the key frame obtained at step 104 and the initialization result for the second-type pose corresponding to the visual beacon may be used as the initial value for performing iterative convergence of the second target function, the initialization result for the global position in the second-type pose corresponding to the visual beacon is obtained at step 104, and the initialization result for the global orientation in the second-type pose corresponding to the visual beacon is obtained at step 107.

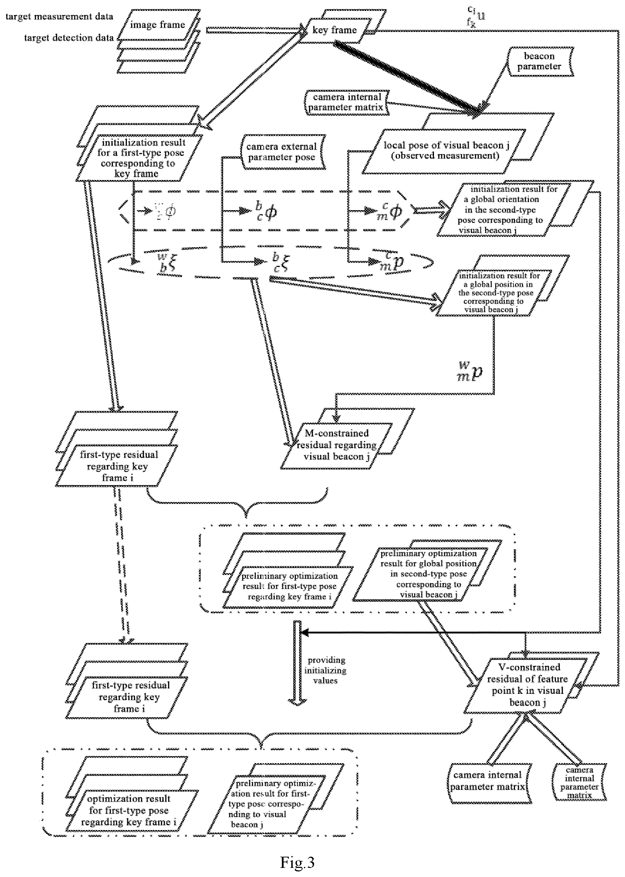

In reference to Figure 3, Figure 3 shows a schematic view of the correlation relationship of image data involved in the above described steps 101 to 110. In this figure:

a key frame is obtained by selecting it from raw data acquired (image frames);

based on the key frame, the local pose of each visual beacon relative to a camera coordinate system, comprising the local position ${}_{m}^{c}p$ of the visual beacon relative to the camera coordinate system and the local orientation ${}_{m}^{c}\phi$ of the visual beacon relative to the camera, i.e., observed measurement value of the visual beacon, is obtained based on a camera internal parameter matrix, a beacon parameter, the image coordinate position of a feature point in the key frame;

based on target measurement data, the result for the target measurement data is taken as an initialization result for the first-type pose corresponding to the key frame, comprising an initialization result ${}_{b}^{w}\xi$ for the global position in the first-type pose corresponding to the key frame and an initialization result ${}_{b}^{w}\phi$ for the global orientation in the second-type pose corresponding to the key frame,

from a camera external parameter, the pose ${}_{c}^{b}\xi$ of the camera external parameter and the orientation ${}_{c}^{b}\phi$ of the camera external parameter, i.e., the rotation vector of the camera external parameter, are obtained;

based on ${}_{b}^{w}\xi$, ${}_{c}^{b}\xi$, ${}_{m}^{c}p$ (in the eclipse in dotted line), an initialization result ${}_{m}^{w}p$ for the global position in the second-type orientation of each visual beacon is obtained;

the local position of each visual beacon in the camera coordinate system of the key frame that the visual beacon is in is obtained by ${}_{b}^{w}\xi$, ${}_{c}^{b}\xi$, ${}_{m}^{w}p$, and a M constrained residual of each visual beacon is obtained based on the difference between this local position and the local position in the image coordinate system corresponding to the key frame that the visual beacon is in,

joint optimization is performed on the first-type residual regarding all key frames and the third-type residual regarding the visual beacons in all key frames, by using the initialization result for the first-type pose corresponding to each key frame and the initialization result for the global position in the second-type pose corresponding to each visual beacon as initial values (not illustrated in the figure), so as to obtain a preliminary optimization result for the first-type orientation corresponding to all key frames and a preliminary optimization result for the global position in the second-type orientation corresponding to all visual beacons in all key frames, the first-type residual of all key frames is obtained based on the target measurement data;

a V-constrained residual of each feature point of each visual beacon in all key frames is calculated by the initialization result for the first-type pose of the visual beacon (comprising an initialization result for the orientation and an initialization result for the position), a camera internal parameter matrix, a beacon parameter, and the local position of a feature point in a camera image, and performing joint optimization on all first-type residuals and all second-type residuals, by using the initialization result for the first-type orientation corresponding to the each key frame and the initialization result for the second-type pose corresponding to the each visual beacon as initial values, so as to obtain an optimization result for the first-type pose corresponding to all key frames and an optimization result for the second-type pose corresponding to all visual beacons in all key frames;

a beacon map is constructed based on the optimization result for the second-type pose obtained.

By using target detection data and target measurement data, the present invention obtains the global pose of a visual beacon by constructing respectively a first target function constrained in terms of odometer and in terms of the local position of the visual beacon and a second target function constrained in terms of odometer and in terms of the image re-projection of a feature point of the visual beacon and solving a joint optimization problem of the first target function and the second target function, so as to construct a beacon map. It can be seen that the dependence on deployment precision of the visual beacon can be reduced by the present solution. **In** addition, since the present solution does not rely on pose information based on which the visual beacon is deployed, requirements for environment measurement can be reduced or the process of environment measurement can be omitted, and work difficulty of deploying the visual beacon is reduced, reducing time and human labor consumption.

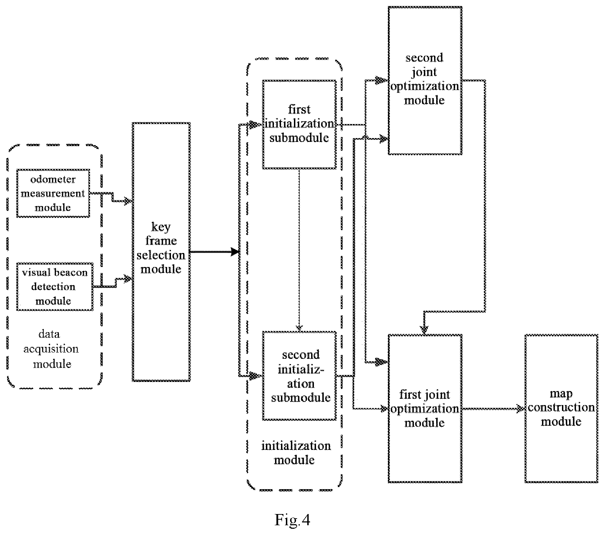

**In** reference to Figure 4, Figure 4 is a schematic view of an apparatus for constructing a beacon map based on a visual beacon according to an embodiment of the present application. The apparatus comprises:

a data acquisition module, used for acquiring target detection data at least comprising an image frame, and target measurement data, the image frame being an image acquired by a robot during the process of performing image acquisition on a pre-deployed visual beacon, the target measurement data comprising: a pose of a robot body of the robot in an odometer coordinate system at the moment the image frame is acquired;

an initialization module, used for obtaining an initialization result for a first-type pose corresponding to the image frame based on the target measurement data, the first-type pose being a pose of the robot body in a world coordinate system at the moment the image frame is sampled, and for obtaining an initialization result for a second-type pose corresponding to the visual beacon based on the target detection data, wherein, the second-type pose is a pose of the visual beacon in the world coordinate system;

a first joint optimization module, used for performing joint optimization on a first-type residual regarding the image frame obtained based on the target measurement data and a second-type residual regarding the image frame and the visual beacon obtained based on the target detection data, by using the first-type pose as a state variable and the second-type pose as a state variable, so as to obtain an optimization result for the second-type pose, wherein, the first-type residual is a constrained residual regarding the odometer of the image frame, and the second-type residual is a constrained residual of the re-projection of a feature point of the visual beacon on the image frame, an initial value of the first-type pose being the initialization result for the first-type pose, an initial value of the second-type pose being an initialization result for the second-type pose;

a map construction module, used for constructing a beacon map based on the optimization result for the second-type pose obtained.

The data acquisition module is specifically used for acquiring at least once an image of each visual beacon deployed in a physical environment for which a beacon map is to be constructed, obtaining target detection data at least comprising an image frame; performing measurement on the target measurement data at the same moment the image frame is acquired.

The data acquisition module comprises an odometer measurement module used for obtaining the target measurement data, and a visual beacon detection module used for obtaining the target detection data.

The initialization module comprises a first initialization submodule used for obtaining the initialization result for the first-type pose corresponding to the image frame based on the target measurement data, and a second initialization submodule used for obtaining the initialization result for the second-type pose corresponding to the visual beacon based on the target detection data; wherein,

the first initialization submodule is specifically used for taking the pose of a robot body of the robot in an odometer coordinate system at the moment the image frame is acquired, as the initialization result for the first-type pose corresponding to the image frame;

the second initialization submodule is specifically used for:

for any visual beacon in the image frame, obtaining respectively an initialization result for the position of the visual beacon in a world coordinate system and an initialization result for the orientation of the visual beacon in the world coordinate system, by means of a camera pose corresponding to the image frame to which the visual beacon belongs when the visual beacon is observed for the first time, and the target detection data;

visual beacon detection data comprises an observed measurement value of the visual beacon obtained from a local pose of the visual beacon relative to a camera coordinate system;

the local pose of the visual beacon relative to a camera coordinate system is obtained based on an image coordinate of a feature point in the visual beacon, a camera internal parameter, and a beacon parameter;

the camera pose corresponding to the image frame to which the visual beacon belongs is: the camera pose of the camera when it acquires the image frame to which the visual beacon belongs.

The second initialization submodule is specifically used for:

for any visual beacon in the image frame, obtaining an initialization result for the position of the visual beacon in a world coordinate system, based on a vector of the first-type pose corresponding to the image frame, a pose vector of a camera external parameter, and a vector of an observed measurement value, a camera pose corresponding to the image frame to which the visual beacon belongs when the visual beacon is observed for the first time is obtained based on the vector of the first-type pose corresponding to the image frame to which the visual beacon belongs and the pose vector of the camera external parameter;

obtaining an initialization result for the orientation of the visual beacon in the world coordinate system based on a global rotation vector in a robot body coordinate system, a rotation vector of the camera external parameter, and a local rotation vector of the visual beacon in a camera coordinate system;

the global rotation vector of the robot body coordinate system is obtained from the initialization result for the first-type pose, the rotation vector of the camera external parameter is obtained from the camera external parameter, and the local rotation vector of the visual beacon in a camera coordinate system is obtained from the local pose of the visual beacon relative to the camera coordinate system.

The apparatus further comprises: a second joint optimization module, used for:

obtaining a third-type residual regarding the visual beacon; wherein, the third-type residual is a constrained residual of the local position of the visual beacon in the image frame;

performing joint optimization on the first-type residual and the third-type residual, by using the first-type pose as a state variable and the global position in the second-type pose as a state variable, so as to obtain a preliminary optimization result for the first-type pose and a preliminary optimization result for the global position in the second-type pose; wherein, the initial value of the first-type pose is the initialization result for the first-type pose, and the initial value of the global position in the second-type pose is the initialization result for the global position in the second-type pose;

taking the preliminary optimization result for the first-type pose as the initialization result for the first-type pose;

taking the preliminary optimization result for the global position in the second-type pose as the initialization result for the global position in the second-type pose;

obtaining the global orientation in the second-type pose corresponding to the visual beacon based on the target detection data comprises:

obtaining an initialization result for the global orientation in the second-type orientation corresponding to the visual beacon, based on a camera pose corresponding to the image frame to which the visual beacon belongs when the visual beacon is observed for the first time, and the target detection data.

Optionally, there are a plurality of image frames; the second joint optimization module is specifically used for: constructing a first target function that merges each first-type residual and each third-type residual, and obtaining a preliminary optimization result for each first-type pose and a preliminary optimization result for the global position in each second-type pose that minimize the first target function, by iterations using the initialization result for each first-type pose and the initialization result for the global position of each second-type pose as initial iteration values. Optionally, there are a plurality of image frames, the first joint optimization module is specifically used for:

constructing a second target function that merges each first-type residual and each second-type residual, and obtaining an optimization result for each second-type pose that minimizes the second target function by iteration using the initialization result for each first-type pose and the initialization result for each second-type pose as initial iteration values.

Optionally, the process of obtaining a first-type residual regarding the image frame based on the target measurement data performed by the first joint optimization module comprises:

for each image frame, obtaining a first-type relative pose and a second-type relative pose between the image frame and an image frame adjacent to the image frame, the first-type relative pose and the second-type relative pose are both varied poses of a robot body at a moment the image frame is acquired relative to a moment the adjacent image frame is acquired; the first-type relative pose is determined based on the state variable of the first-type pose, and the second-type relative pose is determined based on the target measurement data;

calculating a first-type residual of the image frame from the difference between the first-type relative pose and the second-type relative pose;

adding up the first-type residual of each image frame, obtaining a first-type residual of all image frames.

Optionally, the process of obtaining a third-type residual regarding the visual beacon performed by the second joint optimization module comprise:

for any visual beacon in each image frame, obtaining the difference between the local position of the visual beacon in a camera coordinate system corresponding to the image frame and the observed measurement value of the visual beacon, so as to obtain a third-type residual of the visual beacon;

adding up the third-type residual of each visual beacon, obtaining a third-type residual of all visual beacons;

the local position of the visual beacon in a camera coordinate system corresponding to the image frame is obtained by a camera external parameter pose corresponding to the visual beacon, a current state vector of the first-type pose corresponding to the image frame, and a current state vector of the global position in the second-type pose corresponding to the visual beacon; the current state vector of the first-type pose corresponding to the image frame being the initialization result for the first-type pose corresponding to the image frame in the first iteration, the current state vector of the global position in the second-type pose corresponding to the visual beacon being the vector of the initialization result for the global position in the second-type pose corresponding to the visual beacon in the first iteration.

Optionally, determining of obtaining a second-type residual regarding the image frame and the visual beacon based on the target detection data performed by the first joint optimization module comprises:

for each image frame, obtaining a constrained residual of the re-projection of all feature points of all visual beacons located in the image frame on the image frame, based on a current state variable of the second-type pose corresponding to each visual beacon in the image frame, and the target detection data.

Optionally, for each image frame, obtaining a constrained residual of the re-projection of all feature points of all visual beacons located in the image frame on the image frame, based on a current state variable of the second-type pose corresponding to each visual beacon in the image frame, and the target detection data performed by the first joint optimization module comprises:

for any feature point that any visual beacon in each image frame has, obtaining a re-projection error of the feature point in the visual beacon on the image frame, based on a camera internal parameter matrix, a current state variable of the first-type pose corresponding to the image frame, a current state variable of the second-type pose corresponding to the visual beacon, and the difference between a projection function of the local position of the feature point in a beacon coordinate system and a measurement of an image coordinate of the feature point,

adding up the re-projection error of each feature point of each visual beacon, obtaining a constrained residual regarding the re-projection of all feature points of all visual beacons on the image frame.

Optionally, there are a plurality of image frames;
the apparatus further comprises a key frame selection module, used for, after obtaining target detection data at least comprising an image frame, and target measurement data, selecting a key frame from a plurality of image frames according to any of the following conditions or a combination thereof:

when a beacon image exists in a current frame, then the frame is taken as a key frame;

when the position translation offset between the measurement of a current frame regarding odometer and the measurement of an existing key frame regarding odometer is larger than a set translation threshold, then the current frame is taken as a key frame;

when the rotation offset between the measurement of a current frame regarding odometer and the measurement of an existing key frame regarding odometer is larger than a set rotation threshold, then the current frame is taken as a key frame;

the first frame is a key frame;

obtaining an initialization result for the first-type pose corresponding to the image frame based on the target measurement data comprises: obtaining an initialization result for the first-type pose corresponding to a key frame based on the target measurement data;

the first-type residual regarding the image frame obtained based on the target measurement data comprises:

a first-type residual regarding the key frame obtained based on the target measurement data;

the second-type residual is a constrained residual of the re-projection of a feature point of the visual beacon on the key frame.

An embodiment of the present application further provides an electronic device for constructing a beacon map based on a visual beacon, comprising a memory and a processor, wherein, the memory is used for storing a computer program; the processor is used for executing the computer program stored in the memory to implement the method for constructing a beacon map based on a visual beacon.

The memory may include random access memory (RAM), and may also include nonvolatile memory (NVM), for example, at least one disk memory. Optionally, the memory may also be at least one storage apparatus located far away from the foregoing processor. The above-mentioned processor may be a general-purpose processor, including a central processing unit (CPU), a network processor (NP), and the like; it may also be a digital signal processor (DSP), an application specific integrated circuit (ASIC), Field-Programmable Gate Array (FPGA) or other programmable logic devices, discrete gates or transistor logic apparatus, discrete hardware components.

An embodiment of the present application further provides a computer readable storage medium having a computer program stored therein, the computer program that, upon executed by a processor, implements steps of the method for constructing a beacon map based on a visual beacon according to the present application.

An embodiment of the present application provides a computer program that, upon executed by a processor, implements the method for constructing a beacon map based on a visual beacon according to the present application.

For the apparatus/network-side device/storage medium embodiment, since it is basically similar to the method embodiment, the description is relatively simple, and for related parts, reference can be made to the part of the description of the method embodiment.

Herein, relationship terms such as "first," "second" and the like are only used to distinguish one entity or operation from a entity or operation, and do not necessarily require or imply that there is any such actual relationship or order between those entities or operations. Moreover, the terms "include," "contain" or any other variants are intended to cover a non-exclusive inclusion, such that processes, methods, objects or devices comprising a series of elements include not only those elements, but also other elements not specified or the elements inherent to those processes, methods, objects, or apparatus. Without further limitations, an element limited by the phrase "comprise(s) a... " do not exclude that there are other identical elements in the processes, methods, objects, or apparatus that comprise that element.

**Claims**

1. A method for constructing a beacon map based on visual beacons, the method comprising:

acquiring (101) target detection data comprising image frames, beacon IDs of visual beacons, and image coordinates of feature points of the visual beacons, and target measurement data; each of the image frames being an image acquired by a robot during the process of performing image acquisition on pre-deployed visual beacons, the target measurement data comprising: poses of a robot body of the robot in an odometer coordinate system at the moments the image frames are acquired;
obtaining initialization results for first-type poses corresponding to the image frames based on the target measurement data, each of the first-type poses being a pose of the robot body in a world coordinate system at the moment each of the image frames is sampled;
obtaining initialization results for second-type poses corresponding to the visual beacons based on the target detection data, wherein, each of the second-type poses is a pose of each of the visual beacons in the world coordinate system;
performing joint optimization on first-type residuals regarding the image frames obtained based on the target measurement data and second-type residuals regarding the image frames and the visual beacons obtained based on the target detection data, by using the first-type poses as state variables and the second-type poses as state variables, so as to obtain optimization results for the second-type poses, wherein, each of the first-type residuals is a constrained residual regarding the odometer of each of the image frames, and each of the second-type residuals is a constrained residual of a re-projection of a feature point of each of the visual beacons on each of the image frames, an initial value of each of the first-type pose being an initialization result for the first-type pose, an initial value of each of the second-type pose being an initialization result for the second-type pose;
constructing (110) the beacon map based on the optimization results for the second-type poses obtained, wherein obtaining initialization results for the second-type poses corresponding to the visual beacons based on the target detection data comprises:

for any visual beacon in the image frame, obtaining respectively an initialization result for the position of the visual beacon in a world coordinate system and an initialization result for the orientation of the visual beacon in the world coordinate system, by means of a camera pose corresponding to the image frame to which the visual beacon belongs when the visual beacon is observed for a first time, and the target detection data; wherein the camera pose corresponding to the image frame to which the visual beacon belongs is: the camera pose of the camera when it acquires the image frame to which the visual beacon belongs;
wherein, the performing joint optimization with the first-type poses as state variables and the second-type poses as state variables, obtaining optimization results for the second-type poses, comprises:
constructing a second target function that merges the first-type residuals and the second-type residuals, and obtaining optimization results for the second-type poses that minimize the second target function by an iteration using the initialization results for the first-type poses and the initialization results for the second-type poses as initial iteration values.

2. The method according to claim 1, wherein, after the obtaining the initialization results for the second-type poses corresponding to the visual beacons based on the target detection data, the method further comprises:

obtaining third-type residuals regarding the visual beacons; wherein, the third-type residuals are constrained residuals of local positions of the visual beacons in the image frames;
performing (106) joint optimization on the first-type residuals and the third-type residuals, by using the first-type poses as state variables and global positions in the second-type poses as state variables, so as to obtain preliminary optimization results for the first-type poses and preliminary optimization results for the global positions in the second-type poses; wherein, the initial values of the first-type poses are the initialization results for the first-type poses, and initial values of the global positions in the second-type poses are initialization results for the global positions in the second-type poses;
taking the preliminary optimization results for the first-type poses as the initialization results for the first-type poses;
taking the preliminary optimization results for the global positions in the second-type poses as the initialization results for the global positions in the second-type poses.

3. The method according to claim 2, wherein,
performing joint optimization by using the first-type poses as the state variables and the global positions in the second-type poses as the state variables, so as to obtain preliminary optimization results for the first-type poses and preliminary optimization results for the global positions in the second-type poses, comprises:
constructing a first target function that merges the first-type residuals and the third-type residuals, and obtaining preliminary optimization results for the first-type poses and preliminary optimization result for the global positions in the second-type poses that minimize the first target function, by iterations using the initialization results for the first-type poses and the initialization results for the global positions of the second-type poses as initial iteration values.

4. The method according to claim 1, obtaining the first-type residuals regarding the image frames based on the target measurement data comprises:

for each image frame, obtaining a first-type relative pose and a second-type relative pose between the image frame and an image frame adjacent to the image frame based on the target measurement data, wherein, the first-type relative pose and the second-type relative pose are both varied poses of the robot body at a moment the image frame is acquired relative to a moment the adjacent image frame is acquired; the first-type relative pose is determined based on the state variable of the first-type pose, and the second-type relative pose is determined based on the target measurement data;
calculating a first-type residual of the image frame from a difference between the first-type relative pose and the second-type relative pose;
adding up the first-type residual of each image frame, obtaining a first-type residual of all image frames.

5. The method according to claim 2, wherein, the obtaining the third-type residuals regarding the visual beacons comprises:

for any visual beacon in each image frame, obtaining a difference between the local position of the visual beacon in a camera coordinate system corresponding to the image frame and an observed measurement value of the visual beacon, so as to obtain the third-type residual of the visual beacon;
adding up the third-type residual of each visual beacon, obtaining a third-type residual of all visual beacons;
wherein, the local position of the visual beacon in the camera coordinate system corresponding to the image frame is obtained by a camera external parameter pose corresponding to the visual beacon, a current state vector of the first-type pose corresponding to the image frame, and a current state vector of the global position in the second-type pose corresponding to the visual beacon; the current state vector of the first-type pose corresponding to the image frame being the initialization result for the first-type pose corresponding to the image frame in the first iteration, the current state vector of the global position in the second-type pose corresponding to the visual beacon being the vector of the initialization result for the global position in the second-type pose corresponding to the visual beacon in the first iteration.

6. The method according to claim 1, wherein, determining of the obtaining second-type residuals regarding the image frames and the visual beacons based on the target detection data comprises:

for each image frame, obtaining a constrained residual of the re-projection of all feature points of all visual beacons located in the image frame on the image frame, based on a current state variable of the second-type pose corresponding to each visual beacon in the image frame, and the target detection data,
preferably, the obtaining a constrained residual of the re-projection of all feature points of all visual beacons located in the image frame on the image frame, based on a current state variable of the second-type pose corresponding to each visual beacon in the image frame, and the target detection data for each image frame, comprises:

for any feature point that any visual beacon in each image frame has, obtaining a re-projection error of the feature point in the visual beacon on the image frame, based on a camera internal parameter matrix, a current state variable of the first-type pose corresponding to the image frame, a current state variable of the second-type pose corresponding to the visual beacon, and a difference between a projection function of the local position of the feature point in a beacon coordinate system and a measurement of an image coordinate of the feature point,
adding up the re-projection error of each feature point of each visual beacon, obtaining a constrained residual regarding the re-projection of all feature points of all visual beacons on the image frame.

7. The method according to claim 1, wherein, the obtaining initialization results for first-type poses corresponding to the image frames based on the target measurement data comprises:

taking the poses of the robot body of the robot in the odometer coordinate system at the moments the image frames are acquired, as the initialization results for the first-type poses corresponding to the image frames;
obtaining initialization results for second-type poses corresponding to the visual beacons based on the target detection data comprises:

for any visual beacon in each of the image frames, obtaining respectively an initialization result for the position of the visual beacon in the world coordinate system and an initialization result for an orientation of the visual beacon in the world coordinate system, by means of a camera pose corresponding to the image frame to which the visual beacon belongs when the visual beacon is observed for the first time, and the target detection data;
wherein, visual beacon detection data comprises an observed measurement value of the visual beacon obtained from a local pose of the visual beacon relative to the camera coordinate system;
the local pose of the visual beacon relative to the camera coordinate system is obtained based on an image coordinate of a feature point in the visual beacon, a camera internal parameter, and a beacon parameter;
the camera pose corresponding to the image frame to which the visual beacon belongs is: the camera pose of the camera when it acquires the image frame to which the visual beacon belongs.

8. The method according to claim 7, wherein, the obtaining respectively an initialization result for the position of the visual beacon in the world coordinate system and an initialization result for an orientation of the visual beacon in the world coordinate system, by means of a camera pose corresponding to the image frame to which the visual beacon belongs when the visual beacon is observed for the first time, and the target detection data for any visual beacon in the image frame, comprises:

for any visual beacon in each of the image frames, obtaining the initialization result for the position of the visual beacon in the world coordinate system, based on a vector of the first-type pose corresponding to the image frame, a pose vector of a camera external parameter, and a vector of an observed measurement value, wherein, a camera pose corresponding to the image frame to which the visual beacon belongs when the visual beacon is observed for the first time is obtained based on the vector of the first-type pose corresponding to the image frame to which the visual beacon belongs and the pose vector of the camera external parameter; obtaining an initialization result for the orientation of the visual beacon in the world coordinate system based on a global rotation vector in a robot body coordinate system, a rotation vector of the camera external parameter, and a local rotation vector of the visual beacon in the camera coordinate system;
wherein, the global rotation vector of the robot body coordinate system is obtained from the initialization result for the first-type pose,
the rotation vector of the camera external parameter is obtained from the camera external parameter, and
the local rotation vector of the visual beacon in the camera coordinate system is obtained from the local pose of the visual beacon relative to the camera coordinate system.

9. The method according to claim 1, wherein, the acquiring (101) target detection data comprising image frames, beacon IDs of visual beacons, and image coordinates of feature points of the visual beacons, and target measurement data comprises:

acquiring at least once an image of each visual beacon deployed in a physical environment for which a beacon map is to be constructed, so as to obtain the target detection data comprising the image frames;
performing measurement on the target measurement data at the same moment each of the image frames is acquired.

10. The method according to claim 1, wherein,
after acquiring target detection data comprising image frames, beacon IDs of visual beacons, and image coordinates of feature points of the visual beacons, and target measurement data, the method further comprises: selecting the key frames from the image frames according to any of the following conditions or a combination thereof:

when a beacon image exists in a current frame, then the frame is taken as a key frame;

when a position translation offset between a measurement of the current frame regarding odometer and a measurement of an existing key frame regarding odometer is larger than a set translation threshold, then the current frame is taken as a key frame;

when a rotation offset between the measurement of the current frame regarding odometer and the measurement of the existing key frame regarding odometer is larger than a set rotation threshold, then the current frame is taken as a key frame;

the first frame is a key frame;

obtaining initialization results for the first-type poses corresponding to the image frames based on the target measurement data comprises:

obtaining initialization results for the first-type poses corresponding to the key frames based on the target measurement data;

the first-type residuals regarding the image frames obtained based on the target measurement data comprises:

first-type residuals regarding the key frames obtained based on the target measurement data;

the second-type residuals are constrained residuals of the re-projection of the feature points of the visual beacons on the key frames.

11. An electronic device for constructing a beacon map based on a visual beacon, the electronic device comprises a memory and a processor, wherein, the memory is used for storing a computer program; the processor is used for executing the computer program stored in the memory to implement the method for constructing a beacon map based on a visual beacon according to any one of claims 1-10.

12. A computer readable storage medium, the computer readable storage medium has stored therein a computer program that, upon executed by a processor, implements the method for constructing a beacon map based on a visual beacon according to any one of claims 1-10.

13. A computer program, when executed by a processor, the computer program implements the method for constructing a beacon map based on a visual beacon according to any one of claims 1-10.

**Patentansprüche**

1. Verfahren zum Konstruieren einer Beacon-Karte auf Grundlage von visuellen Beacons, wobei das Verfahren Folgendes umfasst:

Erfassen (101) von Zielerkennungsdaten, umfassend Bildframes, Beacon-IDs visueller Beacons und Bildkoordinaten von Merkmalspunkten der visuellen Beacons und Zielmessdaten; wobei jeder der Bildframes ein Bild ist, das durch einen Roboter während des Prozesses des Durchführens der Bilderfassung an zuvor eingesetzten visuellen Beacons erfasst wird, wobei die Zielmessdaten Folgendes umfassen: Haltungen eines Roboterkörpers des Roboters in einem Hodometer-Koordinatensystem zu den Zeitpunkten, zu denen die Bildframes erfasst werden;

Gewinnen von Initialisierungsergebnissen für Haltungen ersten Typs, die den Bildframes entsprechen, auf Grundlage der Zielmessdaten, wobei jede von den Haltungen ersten Typs eine Haltung des Roboterkörpers in einem Weltkoordinatensystem zu dem Zeitpunkt ist, zu dem jeder von den Bildframes abgetastet wird;

Gewinnen von Initialisierungsergebnissen für Haltungen zweiten Typs, die den visuellen Beacons entsprechen, auf Grundlage der Zielerkennungsdaten, wobei jede von den Haltungen zweiten Typs eine Haltung jedes von den visuellen Beacons im Weltkoordinatensystem ist;

Durchführen einer gemeinsamen Optimierung an Residuen ersten Typs bezüglich der auf Grundlage der Zielmessdaten gewonnenen Bildframes und Residuen zweiten Typs bezüglich der auf Grundlage der Zielerkennungsdaten gewonnenen Bildframes und visuellen Beacons, durch Verwenden der Haltungen ersten Typs als Zustandsvariablen und der Haltungen zweiten Typs als Zustandsvariablen, um so Optimierungsergebnisse für die Haltungen zweiten Typs zu gewinnen, wobei jedes der Residuen ersten Typs ein eingeschränktes Residuum bezüglich des Hodometers jedes der Bildframes ist und jedes der Residuen zweiten Typs ein eingeschränktes Residuum einer Reprojektion eines Merkmalspunktes jedes der visuellen Beacons auf jeden der Bildframes ist, wobei ein Anfangswert jeder von den Haltungen ersten Typs ein Initialisierungsergebnis für die Haltung ersten Typs ist, wobei ein Anfangswert jeder von den Haltungen zweiten Typs ein Initialisierungsergebnis für die Haltung zweiten Typs ist;

Konstruieren (110) der Beacon-Karte auf Grundlage der gewonnenen Optimierungsergebnisse für die Haltungen zweiten Typs,

wobei das Gewinnen von Initialisierungsergebnissen für die Haltungen zweiten Typs, die den visuellen Beacons entsprechen, auf Grundlage der Zielerkennungsdaten Folgendes umfasst:

für ein beliebiges visuelles Beacon im Bildframe Gewinnen jeweils eines Initialisierungsergebnisses für die Position des visuellen Beacons in einem Weltkoordinatensystem und eines Initialisierungsergebnisses für die Ausrichtung des visuellen Beacons im Weltkoordinatensystem, mittels einer Kamerahaltung, die dem Bildframe entspricht, zu dem das visuelle Beacon gehört, wenn das visuelle Beacon zum ersten Mal beobachtet wird, und der Zielerkennungsdaten; wobei die Kamerahaltung, die dem Bildframe entspricht, zu dem das visuelle Beacon gehört, die Kamerahaltung der Kamera ist, wenn sie den Bildframe erfasst, zu dem das visuelle Beacon gehört;

wobei das Durchführen der gemeinsamen Optimierung mit den Haltungen ersten Typs als Zustandsvariablen und den Haltungen zweiten Typs als Zustandsvariablen, wobei Optimierungsergebnisse für die Haltungen zweiten Typs gewonnen werden, Folgendes umfasst:

Konstruieren einer zweiten Zielfunktion, welche die Residuen ersten Typs und die Residuen zweiten Typs zusammenführt, und Gewinnen von Optimierungsergebnissen für die Haltungen zweiten Typs, welche die zweite Zielfunktion minimieren, durch eine Iteration unter Verwendung der Initialisierungsergebnisse für die Haltungen ersten Typs und der Initialisierungsergebnisse für die Haltungen zweiten Typs als Anfangsiterationswerte.

2. Verfahren nach Anspruch 1, wobei das Verfahren, nach dem Gewinnen der Initialisierungsergebnisse für die Haltungen zweiten Typs, die den visuellen Beacons entsprechen, auf der Grundlage der Zielerkennungsdaten, weiter Folgendes umfasst:

Gewinnen von Residuen dritten Typs bezüglich der visuellen Beacons; wobei die Residuen dritten Typs eingeschränkte Residuen von lokalen Positionen der visuellen Beacons in den Bildframes sind;

Durchführen (106) einer gemeinsamen Optimierung an den Residuen ersten Typs und den Residuen dritten Typs, durch Verwenden der Haltungen ersten Typs als Zustandsvariablen und von globalen Positionen in den Haltungen zweiten Typs als Zustandsvariablen, um so vorläufige Optimierungsergebnisse für die Haltungen ersten Typs und vorläufige Optimierungsergebnisse für die globalen Positionen in den Haltungen zweiten Typs zu gewinnen; wobei die Anfangswerte der Haltungen ersten Typs die Initialisierungsergebnisse für die Haltungen ersten Typs sind und die Anfangswerte der globalen Positionen in den Haltungen zweiten Typs die Initialisierungsergebnisse für die globalen Positionen in den Haltungen zweiten Typs sind;

Nehmen der vorläufigen Optimierungsergebnisse für die Haltungen ersten Typs als die Initialisierungsergebnisse für die Haltungen ersten Typs;

Nehmen der vorläufigen Optimierungsergebnisse für die globalen Positionen in den Haltungen zweiten Typs als die Initialisierungsergebnisse für die globalen Positionen in den Haltungen zweiten Typs.

3. Verfahren nach Anspruch 2, wobei

Durchführen der gemeinsamen Optimierung durch Verwenden der Haltungen ersten Typs als die Zustandsvariablen und der globalen Positionen in den Haltungen zweiten Typs als die Zustandsvariablen, um so vorläufige Optimierungsergebnisse für die Haltungen ersten Typs und vorläufige Optimierungsergebnisse für die globalen Positionen in den Haltungen zweiten Typs zu gewinnen, Folgendes umfasst:

Konstruieren einer ersten Zielfunktion, welche die Residuen ersten Typs und die Residuen dritten Typs zusammenführt, und Gewinnen vorläufiger Optimierungsergebnisse für die Haltungen ersten Typs und vorläufiger Optimierungsergebnisse für die globalen Positionen in den Haltungen zweiten Typs, welche die erste Zielfunktion minimieren, durch Iterationen unter Verwendung der Initialisierungsergebnisse für die Haltungen ersten Typs und der Initialisierungsergebnisse für die globalen Positionen der Haltungen zweiten Typs als Anfangsiterationswerte.

4. Verfahren nach Anspruch 1, wobei das Gewinnen der Residuen ersten Typs bezüglich der Bildframes auf Grundlage der Zielmessdaten Folgendes umfasst:

für jeden Bildframe Gewinnen einer relativen Haltung ersten Typs und einer relativen Haltung zweiten Typs zwischen dem Bildframe und einem zu dem Bildframe benachbarten Bildframe auf Grundlage der Zielmessdaten, wobei die relative Haltung ersten Typs und die relative Haltung zweiten Typs beide unterschiedliche Haltungen des Roboterkörpers zu einem Zeitpunkt, zu dem der Bildframe erfasst wird, relativ zu einem Zeitpunkt, zu dem der benachbarte Bildframe erfasst wird, sind; wobei die relative Haltung ersten Typs auf Grundlage der Zustandsvariablen der Haltung ersten Typs bestimmt wird und die relative Haltung zweiten Typs auf Grundlage der Zielmessdaten bestimmt wird;

Berechnen eines Residuums ersten Typs des Bildframes aus einer Differenz zwischen der relativen Haltung ersten Typs und der relativen Haltung zweiten Typs;

Addieren der Residuen ersten Typs jedes Bildframes, Gewinnen eines Residuums ersten Typs aller Bildframes.

5. Verfahren nach Anspruch 2, wobei das Gewinnen der Residuen dritten Typs bezüglich der visuellen Beacons Folgendes umfasst:

für ein beliebiges visuelles Beacon in jedem Bildframe Gewinnen einer Differenz zwischen der lokalen Position des visuellen Beacons in einem Kamerakoordinatensystem, das dem Bildframe entspricht, und einem beobachteten Messwert des visuellen Beacons, um so das Residuum dritten Typs des visuellen Beacons zu gewinnen,

Addieren der Residuen dritten Typs jedes visuellen Beacons, Gewinnen eines Residuums dritten Typs aller visuellen Beacons;

wobei die lokale Position des visuellen Beacons im Kamerakoordinatensystem, das dem Bildframe entspricht, durch eine kameraexterne Parameterhaltung, die dem visuellen Beacon entspricht, einen aktuellen Zustandsvektor der Haltung ersten Typs, die dem Bildframe entspricht, und einen aktuellen Zustandsvektor der globalen Position in der Haltung zweiten Typs, die dem visuellen Beacon entspricht, gewonnen wird; wobei der aktuelle Zustandsvektor der Haltung ersten Typs, die dem Bildframe entspricht, das Initialisierungsergebnis für die Haltung ersten Typs, die dem Bildframe in der ersten Iteration entspricht, ist, wobei der aktuelle Zustandsvektor der globalen Position in der Haltung zweiten Typs, die dem visuellen Beacon entspricht, der Vektor des Initialisierungsergebnisses für die globale Position in der Haltung zweiten Typs, die dem visuellen Beacon in der ersten Iteration entspricht, ist.

6. Verfahren nach Anspruch 1, wobei das Bestimmen der zu gewinnenden Residuen zweiten Typs bezüglich der Bildframes und der visuellen Beacons auf Grundlage der Zielerkennungsdaten Folgendes umfasst:

für jeden Bildframe Gewinnen eines eingeschränkten Residuums der Reprojektion aller Merkmalspunkte aller im Bildframe befindlichen visuellen Beacons auf den Bildframe, auf Grundlage einer aktuellen Zustandsvariablen der Haltung zweiten Typs, die jedem visuellen Beacon im Bildframe entspricht, und der Zielerkennungsdaten, wobei vorzugsweise das Gewinnen eines eingeschränkten Residuums der Reprojektion aller Merkmalspunkte aller im Bildframe befindlichen visuellen Beacons auf den Bildframe, auf Grundlage einer aktuellen Zustandsvariablen der Haltung zweiten Typs, die jedem visuellen Beacon im Bildframe entspricht, und der Zielerkennungsdaten für jeden Bildframe Folgendes umfasst:

für einen beliebigen Merkmalspunkt, den ein beliebiges visuelles Beacon in jedem Bildframe aufweist, Gewinnen eines Reprojektionsfehlers des Merkmalspunkts im visuellen Beacon auf den Bildframe, auf Grundlage einer kamerainternen Parametermatrix, einer aktuellen Zustandsvariablen der Haltung ersten Typs, die dem Bildframe entspricht, einer aktuellen Zustandsvariablen der Haltung zweiten Typs, die dem visuellen Beacon entspricht, und einer Differenz zwischen einer Projektionsfunktion der lokalen Position des Merkmalspunkts in einem Beacon-Koordinatensystem und einer Messung einer Bildkoordinate des Merkmalspunkts,

Addieren des Reprojektionsfehlers jedes Merkmalspunktes jedes visuellen Beacons, wodurch ein beschränktes Residuum bezüglich der Reprojektion aller Merkmalspunkte aller visuellen Beacons auf das Bildfeld gewonnen wird.

7. Verfahren nach Anspruch 1, wobei das Gewinnen von Initialisierungsergebnissen für Haltungen des ersten Typs, die den Bildframes entsprechen, auf Grundlage der Zielmessdaten Folgendes umfasst:

Nehmen der Haltungen des Roboterkörpers im Hodometer-Koordinatensystem zu den Zeitpunkten, zu denen die Bildframes erfasst werden, als die Initialisierungsergebnisse für die Haltungen des ersten Typs, die den Bildaufnahmen entsprechen;

wobei das Gewinnen von Initialisierungsergebnissen für Haltungen zweiten Typs, die den visuellen Beacons entsprechen, auf Grundlage der Zielerkennungsdaten Folgendes umfasst:

für ein beliebiges visuelles Beacon in jedem von den Bildframes Gewinnen jeweils eines Initialisierungsergebnisses für die Position des visuellen Beacons im Weltkoordinatensystem und eines Initialisierungsergebnisses für die Ausrichtung des visuellen Beacons im Weltkoordinatensystem, mittels einer Kamerahaltung, die dem Bildframe entspricht, zu dem das visuelle Beacon gehört, wenn das visuelle Beacon zum ersten Mal beobachtet wird, und der Zielerkennungsdaten;

wobei die Erkennungsdaten des visuellen Beacons einen beobachteten Messwert des visuellen Beacons umfassen, der aus einer lokalen Haltung des visuellen Beacons relativ zum Kamerakoordinatensystem gewonnen wird;

wobei die lokale Haltung des visuellen Beacons relativ zum Kamerakoordinatensystem auf Grundlage einer Bildkoordinate eines Merkmalspunktes im visuellen Beacon, eines kamerainternen Parameters und eines Beaconparameters gewonnen wird;

wobei die Kamerahaltung, die dem Bildframe entspricht, zu dem das visuelle Beacon gehört, Folgendes ist: die Kamerahaltung der Kamera, wenn sie den Bildframe erfasst, zu dem das visuelle Beacon gehört.

8. Verfahren nach Anspruch 7, wobei jeweils das Gewinnen eines Initialisierungsergebnisses für die Position des visuellen Beacons im Weltkoordinatensystem und eines Initialisierungsergebnisses für die Ausrichtung des visuellen Beacons im Weltkoordinatensystem, mittels einer Kamerahaltung, die dem Bildframe entspricht, zu dem das visuelle Beacon gehört, wenn das visuelle Beacon zum ersten Mal beobachtet wird, sowie der Zielerkennungsdaten für ein beliebiges visuelles Beacon im Bildframe, Folgendes umfasst:

für ein beliebiges visuelles Beacon in jedem der Bildframes Gewinnen des Initialisierungsergebnisses für die Position des visuellen Beacons im Weltkoordinatensystem, auf Grundlage eines Vektors der Haltung ersten Typs, die dem Bildframe entspricht, eines Haltungsvektors eines kameraexternen Parameters und eines Vektors eines beobachteten Messwerts, wobei eine Kamerahaltung, die dem Bildframe entspricht, zu dem das visuelle Beacon gehört, wenn das visuelle Beacon zum ersten Mal beobachtet wird, auf Grundlage des Vektors der Haltung ersten Typs, die dem Bildframe entspricht, zu dem das visuelle Beacon gehört, und des Haltungsvektors des kameraexternen Parameters gewonnen wird, Gewinnen eines Initialisierungsergebnisses für die Ausrichtung des visuellen Beacons im Weltkoordinatensystem, auf Grundlage eines globalen Rotationsvektors in einem Roboterkörper-Koordinatensystem, eines Rotationsvektors des kameraexternen Parameters und eines lokalen Rotationsvektors des visuellen Beacons im Kamerakoordinatensystem;

wobei der globale Rotationsvektor des Roboterkörper-Koordinatensystems aus dem Initialisierungsergebnis für die Haltung des ersten Typs gewonnen wird,

der Rotationsvektor des kameraexternen Parameters aus dem kameraexternen Parameter gewonnen wird und der lokale Rotationsvektor des visuellen Beacons im Kamerakoordinatensystem aus der lokalen Haltung des visuellen Beacons relativ zum Kamerakoordinatensystem gewonnen wird.

9. Verfahren nach Anspruch 1, wobei das Erfassen (101) von Zielerkennungsdaten, umfassend Bildframes, Beacon-IDs von visuellen Beacons und Bildkoordinaten von Merkmalspunkten der visuellen Beacons und Zielmessdaten Folgendes umfasst:

mindestens einmal Erfassen eines Bildes von jedem in einer physischen Umgebung eingesetzten visuellen Beacon, für das eine Beacon-Karte konstruiert werden soll, um die Zielerkennungsdaten zu gewinnen, welche die Bildframes umfassen;

Durchführen einer Messung an den Zielmessdaten zum selben Zeitpunkt, zu dem jeder von den Bildframes erfasst wird.

10. Verfahren nach Anspruch 1, wobei

nach dem Erfassen von Zielerkennungsdaten, umfassend Bildframes, Beacon-IDs von visuellen Beacons und Bildkoordinaten von Merkmalspunkten der visuellen Beacons und Zielmessdaten, das Verfahren weiter Folgendes umfasst: Auswählen der Schlüsselframes aus den Bildframes gemäß einer der folgenden Bedingungen oder einer Kombination davon:

wenn in einem aktuellen Frame ein Beacon-Bild vorhanden ist, dann wird dieser Frame als ein Schlüsselframe genommen;

wenn ein Positionsverschiebungsversatz zwischen einer Messung des aktuellen Frames bezüglich des Hodometers und einer Messung eines vorhandenen Schlüsselframes bezüglich des Hodometers größer ist als ein festgelegter Verschiebungsschwellenwert, dann wird der aktuelle Frame als ein Schlüsselframe genommen;

wenn ein Rotationsversatz zwischen der Messung des aktuellen Frames bezüglich des Hodometers und der Messung des vorhandenen Schlüsselframes bezüglich des Hodometers größer ist als ein festgelegter Rotationsschwellenwert, dann wird der aktuelle Frame als ein Schlüsselframe genommen;
der erste Frame ein Schlüsselframe ist;
das Gewinnen von Initialisierungsergebnissen für die Haltungen ersten Typs, die den Bildframes entsprechen, auf Grundlage der Zielmessdaten Folgendes umfasst:

das Gewinnen von Initialisierungsergebnisse, für die Haltungen ersten Typs, die den Schlüsselframes entsprechen, auf Grundlage der Zielmessdaten;
die Residuen ersten Typs bezüglich der auf Grundlage der Zielmessdaten gewonnenen Bildframes Folgendes umfassen:

Residuen ersten Typs bezüglich der auf Grundlage der Zielmessdaten gewonnenen Schlüsselframes;
die Residuen zweiten Typs eingeschränkte Residuen der Reprojektion der Merkmalspunkte der visuellen Beacon auf die Schlüsselframes sind.

**11.** Elektronische Vorrichtung zum Konstruieren einer Beacon-Karte auf Grundlage eines visuellen Beacons, wobei die elektronische Vorrichtung einen Speicher und einen Prozessor umfasst, wobei
der Speicher zum Speichern eines Computerprogramms verwendet wird; der Prozessor zum Ausführen des im Speicher gespeicherten Computerprogramms verwendet wird, um das Verfahren zum Konstruieren einer Beacon-Karte auf Grundlage eines visuellen Beacons nach einem der Ansprüche 1 bis 10 umzusetzen.

**12.** Computerlesbares Speichermedium, wobei das computerlesbare Speichermedium darin ein Computerprogramm gespeichert hat, das, nachdem es durch einen Prozessor ausgeführt wird, das Verfahren zum Konstruieren einer Beacon-Karte auf Grundlage eines visuellen Beacons nach einem der Ansprüche 1 bis 10 umsetzt.

**13.** Computerprogramm, wobei, wenn es durch einen Prozessor ausgeführt wird, das Computerprogramm das Verfahren zum Konstruieren einer Beacon-Karte auf Grundlage eines visuellen Beacons nach einem der Ansprüche 1 bis 10 umsetzt.

**Revendications**

**1.** Procédé de construction d'une carte de balises sur la base de balises visuelles, le procédé comprenant :

l'acquisition (101) de données de détection cible comprenant des trames d'image, des identifiants de balise visuelle et des coordonnées d'image de points caractéristiques des balises visuelles, ainsi que des données de mesure cible ; chacune des trames d'image étant une image acquise par un robot au cours du processus de réalisation d'acquisition d'image sur des balises visuelles pré-déployées, les données de mesure cible comprenant : des poses d'un corps de robot du robot dans un système de coordonnées d'odomètre aux moments où les trames d'image sont acquises ;
l'obtention de résultats d'initialisation pour des poses de premier type correspondant aux trames d'image sur la base des données de mesure cible, chacun des poses de premier type étant une pose du corps de robot dans un système de coordonnées mondial au moment où chacune des trames d'image est échantillonnée ;
l'obtention de résultats d'initialisation pour des poses de deuxième type correspondant aux balises visuelles sur la base des données de détection cibles, où chaque pose de deuxième type est une pose de chacune des balises visuelles dans le système de coordonnées mondial ;
la réalisation d'une optimisation conjointe sur des résidus de premier type concernant les trames d'image obtenues sur la base des données de mesure cible et sur des résidus de deuxième type concernant les trames d'image et les balises visuelles obtenues sur la base des données de détection cible, à l'aide des poses de premier type comme variables d'état et des poses de deuxième type comme variables d'état, afin d'obtenir des résultats d'optimisation pour les poses de deuxième type, dans lequel chacun des résidus de premier type est un résidu contraint concernant l'odomètre de chacune des trames d'image, et chacun des résidus de deuxième type est un résidu contraint d'une reprojection d'un point caractéristique de chacune des balises visuelles sur chacune des trames d'image, une valeur initiale de chaque pose de premier type étant un résultat d'initialisation pour la pose de premier type, une valeur initiale de chaque pose de deuxième type étant un résultat d'initialisation pour la pose de deuxième type ;
la construction (110) de la carte de balises sur la base des résultats d'optimisation pour les poses de deuxième type obtenues,
dans lequel l'obtention de résultats d'initialisation pour les poses de deuxième type correspondant aux balises visuelles sur la base des données de détection cible comprend :

pour toute balise visuelle dans la trame d'image, l'obtention respectivement d'un résultat d'initialisation pour la position de la balise visuelle dans un système de coordonnées mondial et d'un résultat d'initialisation pour l'orientation de la balise visuelle dans le système de coordonnées mondial, au moyen d'une pose de caméra correspondant à la trame d'image à laquelle appartient la balise visuelle lors de la première observation de celle-ci, et des données de détection cible ; dans lequel la pose de caméra correspondant à la trame d'image à laquelle appartient la balise visuelle est : la pose de caméra de la caméra lorsqu'elle acquiert la trame d'image à laquelle appartient la balise visuelle ;

dans lequel la réalisation de l'optimisation conjointe avec les poses de premier type comme variables d'état et les poses de deuxième type comme variables d'état, en obtenant des résultats d'optimisation pour les poses de deuxième type, comprend :

la construction d'une deuxième fonction cible qui fusionne les résidus de premier type et les résidus de deuxième type, et l'obtention de résultats d'optimisation pour les poses de deuxième type qui minimisent la deuxième fonction cible par une itération à l'aide des résultats d'initialisation pour les poses de premier type et des résultats d'initialisation pour les poses de deuxième type comme valeurs d'itération initiales.

2. Procédé selon la revendication 1, dans lequel, après l'obtention des résultats d'initialisation pour les poses de deuxième type correspondant aux balises visuelles sur la base des données de détection cible, le procédé comprend en outre :

l'obtention de résidus de troisième type concernant les balises visuelles ; dans lequel les résidus de troisième type sont des résidus contraints de positions locales des balises visuelles dans les trames d'image ;

la réalisation (106) d'une optimisation conjointe sur les résidus de premier type et les résidus de troisième type, à l'aide des poses de premier type comme variables d'état et des positions globales dans les poses de deuxième type comme variables d'état, afin d'obtenir des résultats d'optimisation préliminaires pour les poses de premier type et des résultats d'optimisation préliminaires pour les positions globales dans les poses de deuxième type ; dans lequel les valeurs initiales des poses de premier type sont les résultats d'initialisation pour les poses de premier type, et des valeurs initiales des positions globales dans les poses de deuxième type sont des résultats d'initialisation pour les positions globales dans les poses de deuxième type ;

la prise des résultats d'optimisation préliminaires pour les poses de premier type comme résultats d'initialisation pour les poses de premier type ;

la prise des résultats d'optimisation préliminaires pour les positions globales dans les poses de deuxième type comme résultats d'initialisation pour les positions globales dans les poses de deuxième type.

3. Procédé selon la revendication 2, dans lequel,

la réalisation d'optimisation conjointe à l'aide des poses de premier type comme variables d'état et des positions globales dans les poses de deuxième type comme variables d'état, afin d'obtenir des résultats d'optimisation préliminaires pour les poses de premier type et des résultats d'optimisation préliminaires pour les positions globales dans les poses de deuxième type, comprend :

la construction d'une première fonction cible qui fusionne les résidus de premier type et les résidus de troisième type, et l'obtention de résultats d'optimisation préliminaires pour les poses de premier type et un résultat d'optimisation préliminaire pour les positions globales dans les poses de deuxième type qui minimisent la première fonction cible, par itérations à l'aide des résultats d'initialisation pour les poses de premier type et des résultats d'initialisation pour les positions globales des poses de deuxième type comme valeurs d'itération initiales.

4. Procédé selon la revendication 1, dans lequel l'obtention des résidus de premier type concernant les trames d'image sur la base des données de mesure cible comprend :

pour chaque trame d'image, l'obtention d'une pose relative de premier type et d'une pose relative de deuxième type entre la trame d'image et une trame d'image adjacente à la trame d'image sur la base des données de mesure cible, dans lequel la pose relative de premier type et la pose relative de deuxième type sont toutes les deux des poses différentes du corps de robot au moment de l'acquisition de la trame d'image par rapport au moment de l'acquisition de la trame d'image adjacente ; la pose relative de premier type est déterminée sur la base de la variable d'état de la pose de premier type, et la pose relative de deuxième type est déterminée sur la base des données de mesure cible ;

le calcul d'un résidu de premier type de la trame d'image sur la base d'une différence entre la pose relative de premier type et la pose relative de deuxième type ;

en ajoutant le résidu de premier type de chaque trame d'image, l'obtention d'un résidu de premier type de toutes les trames d'image.

5. Procédé selon la revendication 2, dans lequel l'obtention des résidus de troisième type concernant les balises visuelles comprend :

pour chaque balise visuelle dans chaque trame d'image, l'obtention d'une différence entre la position locale de la balise visuelle dans un système de coordonnées de caméra correspondant à la trame d'image et une valeur de mesure observée de la balise visuelle, afin d'obtenir le résidu de troisième type de la balise visuelle ;
en ajoutant le résidu de troisième type de chaque balise visuelle, l'obtention d'un résidu de troisième type de toutes les balises visuelles ;
dans lequel la position locale de la balise visuelle dans le système de coordonnées de caméra correspondant à la trame d'image est obtenue par une pose de paramètre externe de caméra correspondant à la balise visuelle, un vecteur d'état actuel de la pose de premier type correspondant à la trame d'image et un vecteur d'état actuel de la position globale dans la pose de deuxième type correspondant à la balise visuelle ; le vecteur d'état actuel de la pose de premier type correspondant à la trame d'image étant le résultat de l'initialisation pour la pose de premier type correspondant à la trame d'image lors de la première itération, le vecteur d'état actuel de la position globale dans la pose de deuxième type correspondant à la balise visuelle étant le vecteur du résultat de l'initialisation pour la position globale dans la pose de deuxième type correspondant à la balise visuelle lors de la première itération.

6. Procédé selon la revendication 1, dans lequel la détermination des résidus de deuxième type obtenus concernant les trames d'image et les balises visuelles sur la base des données de détection cible comprend :

pour chaque trame d'image, l'obtention d'un résidu contraint de la reprojection de tous les points caractéristiques de toutes les balises visuelles situées dans la trame d'image sur la trame d'image, sur la base d'une variable d'état actuelle de la pose de deuxième type correspondant à chaque balise visuelle dans l'image, et des données de détection cible,
de préférence, l'obtention d'un résidu contraint de la reprojection de tous les points caractéristiques de toutes les balises visuelles situées dans la trame d'image sur la trame d'image, sur la base d'une variable d'état actuelle de la pose de deuxième type correspondant à chacune des balises visuelles dans la trame d'image, et des données de détection cible pour chaque trame d'image, comprend :

pour tout point caractéristique présent dans toute balise visuelle dans chaque trame d'image, l'obtention d'une erreur de reprojection du point caractéristique dans la balise visuelle sur la trame d'image, sur la base d'une matrice de paramètres internes de caméra, d'une variable d'état actuelle de la pose de premier type correspondant à la trame d'image, d'une variable d'état actuelle de la pose de deuxième type correspondant à la trame d'image, et d'une différence entre une fonction de projection de la position locale du point caractéristique dans un système de coordonnées de balise et une mesure d'une coordonnée d'image du point caractéristique,
en ajoutant l'erreur de reprojection de chaque point caractéristique de chaque balise visuelle, l'obtention d'un résidu contraint concernant la reprojection de tous les points caractéristiques de toutes les balises visuelles sur la trame d'image.

7. Procédé selon la revendication 1, dans lequel l'obtention de résultats d'initialisation pour des poses de premier type correspondant aux trames d'image sur la base des données de mesure cible comprend :

la prise des poses du corps de robot du robot dans le système de coordonnées d'odomètre aux moments où les trames d'image sont acquises, comme résultats d'initialisation pour les poses de premier type correspondant aux trames d'image ;
l'obtention de résultats d'initialisation pour les poses de deuxième type correspondant aux balises visuelles sur la base des données de détection cible comprend :

pour chaque balise visuelle dans chacune des trames d'image, l'obtention respectivement d'un résultat d'initialisation pour la position de la balise visuelle dans le système de coordonnées mondial et d'un résultat d'initialisation pour une orientation de la balise visuelle dans le système de coordonnées mondial, au moyen d'une pose de caméra correspondant à la trame d'image à laquelle appartient la balise visuelle lors de la première observation de celle-ci, et des données de détection cible ;
dans lequel les données de détection de balise visuelle comprennent une valeur de mesure observée de la balise visuelle obtenue sur la base d'une pose locale de la balise visuelle par rapport au système de coordonnées de caméra ;

la pose locale de la balise visuelle par rapport au système de coordonnées de caméra est obtenue sur la base des coordonnées d'image d'un point caractéristique de la balise visuelle, d'un paramètre interne de caméra et d'un paramètre de balise ;

la pose de caméra correspondant à la trame d'image à laquelle appartient la balise visuelle est : la pose de caméra de la caméra lorsqu'elle acquiert la trame d'image à laquelle appartient la balise visuelle.

**8.** Procédé selon la revendication 7, dans lequel l'obtention respectivement d'un résultat d'initialisation pour la position de la balise visuelle dans le système de coordonnées mondial et d'un résultat d'initialisation pour une orientation de la balise visuelle dans le système de coordonnées mondial, au moyen d'une pose de caméra correspondant à la trame d'image à laquelle appartient la balise visuelle lors de la première observation de celle-ci, et des données de détection cible pour toute balise visuelle dans l'image, comprend :

pour chaque balise visuelle dans chacune des trames d'image, l'obtention du résultat d'initialisation pour la position de la balise visuelle dans le système de coordonnées mondial, sur la base d'un vecteur de la pose de premier type correspondant à la trame d'image, d'un vecteur de pose d'un paramètre externe de caméra et d'un vecteur d'une valeur de mesure observée, dans lequel une pose de caméra correspondant à la trame d'image à laquelle appartient la balise visuelle lors de la première observation de celle-ci est obtenue sur la base du vecteur de la pose de premier type correspondant à la trame d'image à laquelle appartient la balise visuelle et du vecteur de pose du paramètre externe de caméra ; l'obtention d'un résultat d'initialisation pour l'orientation de la balise visuelle dans le système de coordonnées mondial sur la base d'un vecteur de rotation global dans un système de coordonnées de corps de robot, d'un vecteur de rotation du paramètre externe de caméra et d'un vecteur de rotation local de la balise visuelle dans le système de coordonnées de caméra ;

dans lequel le vecteur de rotation global du système de coordonnées de corps de robot est obtenu sur la base du résultat d'initialisation pour la pose de premier type,

le vecteur de rotation du paramètre externe de caméra est obtenu sur la base du paramètre externe de caméra, et le vecteur de rotation local de la balise visuelle dans le système de coordonnées de caméra est obtenu sur la base de la pose locale de la balise visuelle par rapport au système de coordonnées de caméra.

**9.** Procédé selon la revendication 1, dans lequel l'acquisition (101) de données de détection cible comprenant des trames d'image, des identifiants de balise de balises visuelles et des coordonnées d'image de points caractéristiques des balises visuelles, et des données de mesure cible comprend :

l'acquisition au moins une fois d'une image de chaque balise visuelle déployée dans un environnement physique pour lequel une carte de balises doit être construite, afin d'obtenir les données de détection cible comprenant les trames d'image ;

la réalisation de mesure sur les données de mesure cible au même moment où chacune des trames d'image est acquise.

**10.** Procédé selon la revendication 1, dans lequel,

après l'acquisition de données de détection cible comprenant des trames d'image, des identifiants de balise de balises visuelles et des coordonnées de points caractéristiques des balises visuelles, et de données de mesure cible, le procédé comprend en outre : la sélection des trames clés parmi les trames d'image selon l'une des conditions suivantes ou une combinaison de celles-ci :

lorsqu'une image de balise existe dans une trame actuelle, alors la trame est prise comme trame clé ;

lorsqu'un décalage de translation de position entre une mesure de la trame actuelle par rapport à l'odomètre et une mesure d'une trame clé existante par rapport à l'odomètre est supérieur à un seuil de translation défini, alors la trame actuelle est prise comme trame clé ;

lorsqu'un décalage de rotation entre la mesure de la trame actuelle par rapport à l'odomètre et la mesure de la trame clé existante par rapport à l'odomètre est supérieur à un seuil de rotation défini, alors la trame actuelle est prise comme trame clé ;

la première trame est une trame clé ;

l'obtention de résultats d'initialisation pour les poses de premier type correspondant aux trames d'image sur la base des données de mesure cible comprend :

l'obtention de résultats d'initialisation pour les poses de premier type correspondant aux trames clés sur la base des données de mesure cible ;
les résidus de premier type concernant les trames d'image obtenus sur la base des données de mesure cible comprennent :

des résidus de premier type concernant les trames clés obtenus sur la base des données de mesure cible ;
les résidus de deuxième type sont des résidus contraints de la reprojection des points caractéristiques des balises visuelles sur les trames clés.

11. Dispositif électronique permettant de construire une carte de balises sur la base d'une balise visuelle, le dispositif électronique comprenant une mémoire et un processeur, dans lequel,
la mémoire est utilisée pour stocker un programme informatique ; le processeur est utilisé pour exécuter le programme informatique stocké dans la mémoire afin de mettre en œuvre le procédé de construction d'une carte de balises sur la base d'une balise visuelle selon l'une quelconque des revendications 1-10.

12. Support de stockage lisible par ordinateur, le support de stockage lisible par ordinateur contenant un programme informatique qui, lorsqu'il est exécuté par un processeur, met en œuvre le procédé de construction d'une carte de balises sur la base d'une balise visuelle selon l'une quelconque des revendications 1-10.

13. Programme informatique qui, lorsqu'il est exécuté par un processeur, met en œuvre le procédé de construction d'une carte de balises sur la base d'une balise visuelle selon l'une quelconque des revendications 1-10.

fixedly deploying a certain number of visual beacon(s) in a
physical environment for which a beacon map is to be constructed,
the visual beacon comprising a feature point for positioning

acquiring target detection data at least comprising animage
frame, and target measurement data — 101

based on raw data acquired, selecting a certain
number of key frame(s) from the raw data
based on a key frame selection strategy — 102

obtaining the local pose of the visual beacon relative to a camera
coordinate system, based on a key frame comprising the visual
beacon, and a beacon parameter of the feature beacon obtained at
step 101 — 103

initializing the first-type pose corresponding to the
key frame, and initializing the global position in the
second-type pose correspondingto the visual beacon — 104

M-constrained
joint
optimization

calculating respectively a first-type residual regarding the key
frame and a third-type residual regarding the visual beacon,
based on the initialization result for the first-type pose
corresponding to the key frame and the initialization result for
the global position in the second-type pose corresponding to
the visual beacon — 105

performing joint optimization on the first-type residual of all key frames selected
and the third-type residual of all visual beacons in all key frames, so as to generate
a preliminary optimization result for the first-type pose corresponding to all key
frames and a preliminary optimization result for the global position in the second-
type pose corresponding to all visual beacons in the key frames — 106

initializing the global orientation (angles) in the second type
pose corresponding to the visual beacon, based on the key frame
that has the visual beacon — 107

V-constrained
joint
optimization

calculating a second-type residual regarding the key frame and
the visual beacon based on the initialization result for the second
-type orientation corresponding to the visual beacon — 108

performing joint optimization on all first residuals and all second-type
residuals of all key frames selected, constructing a second target function
that merges the both constrained residuals, and solving the first-type
pose corresponding to the key frame and the second-type pose corresponding to the visual beacon that minimize the second target function — 109

constructing a beacon map based on the
second-type pose corresponding to the visual
beacon obtained — 110

end

Fig.1

Fig.2

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910603494